# EUROPÄISCHE PATENTANMELDUNG

(11) **EP 4 756 233 A1**
(43) Veröffentlichungstag der Anmeldung: **10.06.2026**
(21) Anmeldenummer: 25219890.8
(22) Anmeldetag: 01.12.2025
(51) Int. Cl.: F04D 13/06, F04D 29/58, H02K 3/24

(54) **PUMPE MIT ELEKTRISCHEM ANTRIEBSMOTOR UND STATORKÜHLUNG**

(30) Priorität: 04.12.2024 DE 102024136139
(71) Anmelder: Schwäbische Hüttenwerke Automotive GmbH, 73433 Aalen (DE)
(72) Erfinder: Dr. Meinig, Uwe, 88348 Bad Saulgau (DE); Baur, Dominik, 72516 Scheer (DE)
(74) Vertreter: SSM Sandmair

(57) **Zusammenfassung**

Eine Pumpe zur Förderung eines Fluids umfasst ein Fördergehäuse (1, 4) mit einem Einlass (2) und einem Auslass (3) für das Fluid, ein im Fördergehäuse (1, 4) drehbares Förderrad (15) zur Förderung des Fluids und einen elektrischen Antriebsmotor mit einem Rotor (10), der mit dem Förderrad (15) für dessen Antrieb gekoppelt ist, und einem Stator (20), der mit dem Rotor (10) einen Laufspalt (14) um die Motorachse (R) bildet. Der Stator (20) umfasst einen Statorkern (21, 22, 23) mit Statorzähnen (21) und zwischen den Statorzähnen (21) verbleibenden Zahnlücken, elektrische Leitungen, die zur Bildung elektrischer Spulen (25) um die Statorzähne (21) gewickelt sind, eine Erstisolation (26), die zur elektrischen Isolierung zwischen dem jeweiligen Statorzahn (21) und der Spule (25), die den jeweiligen Statorzahn (21) umgibt, gebildet ist, und eine Zweitisolation (28), die zur elektrischen Isolierung benachbarter Spulen (25) in den Zahnlücken gebildet ist.

## Beschreibung

Die Erfindung betrifft eine Pumpe, die zur Förderung eines Fluids, vorzugsweise einer Flüssigkeit, von einem elektrischen Antriebsmotor angetrieben wird. Bei dem zu fördernden Fluid kann es sich beispielsweise um ein Kühlfluid und/oder ein Schmierfluid zur Kühlung und/oder Schmierung einer oder mehrerer Komponenten eines Traktionsantriebs eines Kraftfahrzeugs handeln. Die Pumpe kann insbesondere eine Kühl- und/oder Schmiermittelpumpe für ein Kraftfahrzeug sein und beispielsweise der Kühlung einer Primärbatterie und/oder der Kühlung und/oder Schmierung eines elektrischen Traktionsmotors eines rein elektrisch angetriebenen Fahrzeugs oder eines Hybridfahrzeugs oder der Kühlung und/oder Schmierung eines Verbrennungsmotors eines Hybridfahrzeugs oder eines rein verbrennungsmotorisch angetriebenen Fahrzeugs dienen.

Zur Förderung von Kühlmedien in Kraftfahrzeugen kommen im zunehmenden Umfang elektrisch angetriebene, überwiegend als Kreiselpumpen ausgebildete Pumpen zum Einsatz. Die hierfür eingesetzten elektrischen Antriebsmotoren sind aktuell überwiegend elektronisch kommutierte, d.h. bürstenlose Gleichstrommotoren (BLDC-Motoren), die in der Regel mit 12, 25 oder 48 V betrieben werden. Diese integrierten bzw. pumpeneigenen Elektromotoren können entweder als sogenannte Nass- oder als Trockenläufer ausgeführt werden. Bei Trockenläuferpumpen ist der Elektromotor in der Regel wälzgelagert, wobei der mit dem Fluid beaufschlagte Teil der Pumpe über eine Wellendichtung, z.B. eine Gleitringdichtung oder ein Wellendichtring (lip seal), gegenüber dem Elektromotor gedichtet wird. Wegen der großen und kostspieligen Wälzlager, der wesentlichen Kosten für die technisch anspruchsvolle Wellendichtung, der vergleichsweise aufwändigen Kühlkonzepte für den Elektromotor und der in der Pumpe, beispielsweise in ein Motorgehäuse der Pumpe integrierten Ansteuerungsplatine sind Trockenläuferpumpen bei Pkw- Kühlfluidpumpen wenig verbreitet. Bei Nassläuferpumpen sind zumindest Teile des Elektromotors, wie etwa der Rotor und die Lager des Rotors, vom Fördermedium benetzt.

Die DE 10 2021 133 484 A1 offenbart eine Fluidpumpe mit einem integrierten elektrischen Antriebsmotor, der zur Kühlung von dem zu fördernden Fluid durchströmbar ist. Der Antriebsmotor umfasst einen Stator mit einem Statorkern, der zur Bildung elektrischer Spulen mit elektrischen Leitungen bewickelt sind. Der Statorkern wird vor dem Bewickeln mit einer Erstisolation und nach dem Bewickeln und Kontaktieren zusätzlich mit einer Zweitisolation umspritzt, so dass die Umspritzung ein Spaltrohr ausbildet. Die Umspritzung weist am Außenumfang und/oder am Innenumfang des Stators achsparallele, nutenförmige Kühlkanäle und in Umfangsrichtung zwischen den Kühlkanälen gebildete Aussparungen auf, die mit den Kühlkanälen derart korrespondieren, dass die innerhalb der Aussparungen freiliegenden Statorbleche vom Fluid umspült werden können.

Es ist eine Aufgabe der Erfindung, eine kompakte und kostengünstige Pumpe mit einem elektrischen Antriebsmotor mit hohem Gesamtwirkungsgrad und effektiver Kühlung zu verwirklichen.

Die Pumpe soll sich vorteilhafterweise für den Einsatz in einem Kraftfahrzeug und dort zur Förderung eines Kühl- und/oder Schmierfluids eignen.

Wünschenswert ist ein elektrischer Antriebsmotor für eine Pumpe, der kompakt baut, einen hohen Gesamtwirkungsgrad hat und effektiv mittels Fluid kühlbar ist.

Eine Aufgabe kann auch in der Schaffung einer kompakten und leistungsstarken, gleichwohl preiswerten elektromotorisch angetriebenen Pumpe gesehen werden.

Gegenstand der Erfindung ist eine Pumpe zur Förderung eines Fluids, beispielsweise eines Kühl- und/oder Schmierfluids. Das Fluid kann ein Gas oder insbesondere eine Flüssigkeit sein. Die Pumpe umfasst ein Fördergehäuse mit einem Einlass und einem Auslass für das Fluid, ein im Fördergehäuse um eine Drehachse drehbares Förderrad zur Förderung des Fluids und einen elektrischen Antriebsmotor für das Förderrad. Der Antriebsmotor umfasst einen Stator und einen relativ zum Stator und dem Fördergehäuse um eine Motorachse drehbaren Rotor, der für einen Drehantrieb des Förderrads mit dem Förderrad gekoppelt ist. Der Stator umgibt den Rotor und bildet mit dem Rotor einen um die Motorachse erstreckten Laufspalt. Der Stator weist einen Statorkern mit zumindest im Wesentlichen radial zur Motorachse weisenden Statorzähnen und auf die Statorzähne gewickelte elektrische Spulen auf. Um die Spulen vom Statorkern elektrisch zu trennen, umfasst der Stator eine Erstisolation, die den jeweiligen Statorzahn über dessen Umfang umgibt und zwischen dem jeweiligen Statorzahn und der diesen Statorzahn umgebenden Spule gebildet ist. Weiterer Bestandteil des Stators ist eine Zweitisolation, die zur elektrischen Isolierung benachbarter Spulen in den Zahnlücken jeweils benachbarter Statorzähne gebildet ist.

Der Statorkern kann vorteilhafterweise ein Blechpaket mit axial aufeinander gestapelten Statorblechen sein. Die Ausbildung des Statorkerns als Blechpaket erleichtert eine Variation der axialen Länge des Statorkerns durch Variation der Anzahl der aufeinanderliegenden Statorbleche, wodurch das vom Antriebsmotor erzeugbare Drehmoment dem Anwendungsfall entsprechend variiert werden kann. Der Antriebsmotor kann somit einfach und flexibel, ohne Änderung der grundsätzlichen Bauart, auf die Drehmomentbedürfnisse des Anwendungsfalls angepasst werden.

Nach einem ersten Aspekt der Erfindung sind die Statorzähne an ihren Zahnenden, mit denen sie dem Rotor über den Laufspalt radial unmittelbar zugewandt gegenüberliegen, frei von der Erstisolation und auch frei von der Zweitisolation. Die Statorzähne können an ihren dem Rotor radial gegenüberliegenden Zahnenden mit einer dünnen Lackschicht überzogen sein. Bevorzugt sind sie im Bereich der Zahnenden zumindest an der dem Rotor radial zugewandten Umfangsfläche jedoch frei von jeglichem Materialauftrag. Indem die Zahnenden der Statorzähne jeweils an ihrer dem Rotor radial zugewandten Umfangsfläche, die im Folgenden auch als Lauffläche bezeichnet wird, weder vom Isolationsmaterial der Erstisolation noch vom Isolationsmaterial der Zweitisolation bedeckt sind, kann ein Laufspalt mit einer geringen radialen Laufspaltweite verwirklicht werden. Je kleiner die radiale Laufspaltweite, desto geringer sind über den Laufspalt die Verluste in magnetischer Flussdichte, so dass die Spulen bei gleichbleibender Leistung verkleinert und entsprechend der Materialeinsatz für die Spulenwicklungen verringert werden kann. So ist es möglich, einen leistungsfähigen, energieeffizienten, dennoch kompakten und kostengünstigen und dementsprechend wettbewerbsfähigen Antriebsmotor zu verwirklichen.

Da die Statorzähne jeweils an der dem Rotor radial zugewandten umfänglichen Lauffläche, die den Laufspalt begrenzt, frei vom Isolationsmaterial der Erst- und der Zweitisolation sind, können sie im Laufspalt direkt angeströmt werden, wenn der Laufspalt von einem Kühlfluid durchströmt wird. Der Kühleffekt wird noch intensiviert, wenn an der dem Rotor radial zugewandten Lauffläche des jeweiligen Statorzahns das Metall des Statorzahns freiliegt. Ist der Statorkern als Blechpaket ausgeführt, kann Kühlfluid aus dem Laufspalt auch zwischen die Statorbleche gelangen und den Statorkern vorteilhaft von innen kühlen.

Der Laufspalt zwischen Rotor und Stator weist in vorteilhaften Ausführungen radial zur Drehachse gemessen eine radiale Laufspaltweite auf, die kleiner als eine mittlere Dicke der Erstisolation ist. Überzieht die Erstisolation den Statorkern wie bevorzugt in der Art einer Haut, ist die radiale Laufspaltweite in derartigen Ausführungen kleiner als die Dicke dieser "Haut". Vorteilhaft ist, dass der Laufspalt eine radiale Laufspaltweite aufweisen kann, die lediglich die Bauteil- und Positionstoleranzen sowie die Lagerspiele des Antriebsmotors vorhält, um zu verhindern, dass die Lauffläche des jeweiligen Statorzahns im Pumpenbetrieb in Kontakt mit der gegenüberliegenden Lauffläche des Rotors gelangt.

Um den Antriebsmotor angesichts der durch die Spaltweitenreduzierung erzielbaren hohen Leistungsdichte effektiv kühlen zu können, erstreckt sich unter einem zweiten Aspekt der Erfindung in einer oder mehreren der Zahnlücken jeweils ein von Kühlfluid durchströmbarer Kühlkanal in axialer Richtung durch die Zweitisolation. Zweckmäßigerweise erstreckt sich in jeder der Zahnlücken jeweils ein von Kühlfluid durchströmbarer Kühlkanal in axialer Richtung durch die Zweitisolation. In einer oder mehreren der Zahnlücken können sich zwei oder mehr jeweils von Kühlfluid durchströmbare Kühlkanäle in axialer Richtung durch die Zweitisolation erstrecken. Bevorzugt erstreckt sich in der jeweiligen Zahnlücke jedoch nur ein einziger solcher Kühlkanal. Vorteilhafterweise umgibt die Zweitisolation den jeweiligen Kühlkanal über seine gesamte axiale Länge endlos umlaufend. In Abwandlungen kann der jeweilige Kühlkanal stattdessen aber auch in Richtung auf die Motorachse, also nach radial innen, zumindest abschnittsweise offen sein. Die Umfangswand des jeweiligen Kühlkanals kann von einem in der Zweitisolation eingebetteten rohrförmigen Einsatz gebildet sein. Bevorzugter bildet jedoch die Zweitisolation, d. h. das Isolationsmaterial, aus dem die Zweitisolation gebildet ist, unmittelbar die Kanalwandung. Der jeweilige Kühlkanal kann insbesondere als gerader axialer Durchgang gebildet sein und/oder an sich axial gegenüberliegenden Stirnseiten der Zweitisolation münden.

Vorteilhaft ist, wenn der jeweilige Kühlkanal über die gesamte Länge überall einen Querschnitt aufweist, der wenigstens halb so groß wie die zwischen den benachbarten Spulen gemessene Querschnittsfläche der jeweiligen Zahnlücke ist. Je näher das Kühlfluid beim Durchströmen des jeweiligen Kühlkanals dem Statorkern und/oder den Spulen ist, desto effektiver wird die Wärme vom Statorkern und/oder den Spulen abgeführt.

Der Stator ist im Pumpenbetrieb vom Laufspalt und von den internen Kühlkanälen des Stators aus kühlbar. Die Kombination aus Laufspaltkühlung und Kühlkanalkühlung ermöglicht eine intensivere und dadurch auch effektivere Kühlung des Stators und zugleich auch des Rotors, der von der Laufspaltkühlung direkt und von der Kühlkanalkühlung über den Stator und somit indirekt profitiert. Im Vergleich zu jeder der beiden Maßnahmen für sich gesehen kann das Kühlfluid mit einer höheren Durchflussrate durch den Antriebsmotor strömen. Die insgesamt für die Konvektion zur Verfügung stehende Wärmeaustauschfläche ist größer und eröffnet erhöhten Spielraum für eine Optimierung. Zudem werden die Spulen von innen, über die Statorzähne und die vorteilhafterweise thermisch leitende Erstisolation, und von außen, aus den Zahnlücken heraus über die vorteilhafterweise thermisch leitende Zweitisolation, gekühlt. Ergänzend ist anzumerken, dass die Pumpe in vorteilhaften Ausführungen dazu eingerichtet ist, dass im Pumpenbetrieb sowohl der Laufspalt als auch die Kühlkanäle von einem Kühlfluid durchströmt werden. Als Kühlfluid kann insbesondere das vom Förderrad geförderte Fluid dienen.

Die Erstisolation schirmt die Spulen gegen den Statorkern und das bei Ausführung des Statorkerns als Blechpaket zwischen die Statorbleche eindringende Kühlfluid ab. Die Zweitisolation schirmt die Spulen an den Stirnseiten des Stators nach außen ab und dient im Verbund mit der Erstisolation der Abschirmung gegen das in vorteilhaften Ausführungen durch den Laufspalt strömende Kühlfluid. Vorteilhafterweise hüllen die Erst- und die Zweitisolation im Verbund die Spulen ein und schirmen sie gegen den Zutritt von Kühlfluid ab. Das jeweilige Isolationsmaterial sollte ein elektrischer Isolator sein, ist vorteilhafterweise jedoch ein guter Wärmeleiter.

Die Erstisolation und die Zweitisolation sind zumindest im Bereich der Zahnenden um den jeweiligen Statorzahn endlos umlaufend fluiddicht, d. h. undurchlässig für das Fluid, verbunden. Die fluiddichte Verbindung kann insbesondere auf Stoffschluss beruhen. So können die Erstisolation und die Zweitisolation zumindest im Bereich der Zahnenden in einer ringförmig um den jeweiligen Statorzahn umlaufenden Fügezone undurchlässig für das Fluid stoffschlüssig verbunden, beispielsweise verklebt oder vorzugsweise miteinander verschmolzen sein. Die um den jeweiligen Statorzahn im Bereich des Zahnendes gebildete Fügezone, falls eine solche besondere Fügezone vorhanden ist, erstreckt sich zwischen der Lauffläche und der Spule des Statorzahns.

Um die Dichtheit der Verbindung mit erhöhter Sicherheit zu gewährleisten, können die Erstisolation und die Zweitisolation im Bereich der Zahnenden eine oder nebeneinander mehrere um den jeweiligen Statorzahn endlos umlaufende Fügegeometrien aufweisen, die ineinandergreifen und im Eingriff eine ringförmige, für das Fluid undurchlässige Fügezone bilden. Die jeweilige Fügegeometrie kann eine um den jeweiligen Statorzahn umlaufende Abragung oder Vertiefung sein. Bevorzugt läuft oder laufen im Bereich des Zahnendes jedes der Statorzähne eine oder nebeneinander mehrere Abragungen endlos um. Die jeweilige Abragung kann die Form einer Ringscheibe aufweisen, die an ihrer Peripherie unter Ausbildung einer konvexen Rundung oder vorzugsweise unter Ausbildung einer Spitz oder kantig ausläuft. Die Erstisolation und die Zweitisolation können im Bereich der Zahnenden eine um den jeweiligen Statorzahn ringförmig erstreckte Fügezone bilden, in der ein Mikrogefüge der Erstisolation und ein Mikrogefüge der Zweitisolation tiefer als am Grund der Zahnlücken ineinandergreifen. Die Tiefe des Eingriffs wird am Umfang des jeweiligen Statorzahns orthogonal zu der mit der Erstisolation in Kontakt befindlichen Umfangsfläche des Statorzahns gemessen. In vorteilhaften Ausführungen umgibt die Erstisolation den jeweiligen Statorzahn in der Art einer Haut. Die Tiefe des Eingriffs wird dementsprechend orthogonal zu dieser "Haut" gemessen.

Die eine oder mehreren Fügegeometrien der Erstisolation und die eine oder mehreren Fügegeometrien der Zweitisolation können form- und/oder reibschlüssig ineinandergreifen und im Form- und/oder Reibschluss die erforderliche Dichtigkeit erzeugen. Bevorzugt sind sie in der ringförmigen Fügezone stoffschlüssig verbunden, beispielsweise verklebt oder vorteilhafterweise miteinander verschmolzen. Sind sie nur oberflächennah verschmolzen, so besteht auch nach dem Verschmelzen noch ein Eingriff der Fügegeometrien, wenngleich die Fügegeometrien durch das Anschmelzen im Vergleich mit der Form vor dem Anschmelzen verformt sein können. Die Fügegeometrien können insbesondere kammartig ineinandergreifen. Der Eingriff kann geometrisch einer Labyrinthdichtung entsprechen, allerdings mit dem Unterschied, dass keine Relativbewegung zwischen den im Eingriff befindlichen Fügegeometrien stattfinden kann. Sind die Fügegeometrien gänzlich aufgeschmolzen, kann sich die ringförmige Fügezone durch ein beim Verschmelzen entstandenes Schmelzgefüge auszeichnen. Sollten die Erst- und die Zweitisolation aus dem gleichen Werkstoff bestehen und die jeweilige Fügegeometrie vollkommen aufgeschmolzen sein, kann sich die am jeweiligen Zahnende gebildete Fügezone auch nur dadurch auszeichnen, dass in der Fügezone zwischen der Erstisolation und der Zweitisolation kein Übergang mehr erkennbar ist. Neben der ringförmigen Fügezone, radial weiter vom Laufspalt entfernt, und/oder im Grund der Zahnlücken kann in derartigen Ausführungen hingegen noch immer ein Übergang erkennbar sein. Grundsätzlich können die Erst- und die Zweitisolation aber auch außerhalb der im Bereich der Zahnenden erhaltenen besonderen Fügezonen vollkommen, ohne erkennbaren Übergang bereichsweise oder überall miteinander verschmolzen sein.

Vorteilhaft ist, wenn die jeweilige Fügegeometrie der Erstisolation an ihrem vor Herstellung der Zweitisolation freien äußeren Umfangsrand eine oder mehrere Kanten aufweist, indem sie beispielsweise spitz ausläuft oder einen flachen, zylindrischen Umfangsrand mit zwei Kanten aufweist. Ein derartiger Umfangsrand ist einem Anschmelzen insbesondere dann förderlich, wenn die Erstisolation so geformt wird, dass die jeweilige Fügegeometrie der Erstisolation beim Formen der Zweitisolation an der einen oder den mehreren Kanten angeschmolzen werden kann.

Um die Dichtigkeit zwischen der Erstisolation und der Zweitisolation zu verbessern, bestehen auch noch weitere Optionen, alternativ oder zusätzlich zu einem kammartigen Ineinandergreifen. So kann die Erstisolation vor dem Formen der Zweitisolation in der Fügezone oder auch über die gesamte Kontaktfläche einer Plasma-/ Coronaaktivierung und/oder einer Laserstrukturierung unterzogen werden. Alternativ oder zusätzlich kann sie in der Fügezone oder auch über die gesamte Kontaktfläche chemisch aktiviert werden. Nach einem Spritzgießen der Erst- und der Zweitisolation können die beiden Isolationen im Kontakt auch nachträglich abgedichtet werden, beispielsweise mit einem flüssigen Dichtmittel, dass durch Erzeugung einer Druckdifferenz in die Dichtspalte zwischen den beiden Isolationen gesogen oder gedrückt wird, wie es etwa von Vakuumabdichtverfahren für Gussteile bekannt ist.

In vorteilhaften Ausführungen sind die Erstisolation aus einem elektrisch isolierenden ersten Kunststoff und die Zweitisolation aus einem elektrisch isolierenden zweiten Kunststoff geformt und im Bereich der Zahnenden in einer um den jeweiligen Statorzahn ringförmig erstreckten Fügezone miteinander verschmolzen, wie vorstehend diskutiert. Der erste Kunststoff und der zweite Kunststoff können in der ringförmigen Fügezone ein Schmelz- bzw. Mischgefüge bilden. Sind die Erstisolation und die Zweitisolation auch außerhalb der ringförmigen Fügezone miteinander verschmolzen, beispielsweise am Grund der Zahnlücken, so weist das Mischgefüge in der ringförmigen Fügezone eine größere Tiefe als ein Schmelz- bzw. Mischgefüge am Grund der Zahnlücken auf. Die größere Tiefe kann dadurch erzeugt werden, dass die Erstisolation vor Herstellung der Zweitisolation im Bereich der späteren ringförmigen Fügezone eine oder mehrere Fügegeometrien aufweist, beispielsweise eine oder mehrere um den jeweiligen Statorzahn umlaufende Abragungen und/oder eine oder mehrere um den jeweiligen Statorzahn umlaufende Vertiefungen. Vorteilhafterweise wird die Erstisolation mit einer oder mehreren um den jeweiligen Statorzahn umlaufenden Abragungen geformt.

Wird die Zweitisolation wie bevorzugt im Spritzguss geformt, kann die Erstisolation beim Umspritzen mit der Zweitisolation insbesondere im Bereich der jeweiligen Fügegeometrie angeschmolzen oder gänzlich aufgeschmolzen werden, so dass sich in der ringförmigen Fügezone eine besonders innige stoffliche Verbindung des ersten Kunststoffs und des zweiten Kunststoffs ergibt. Die jeweilige Fügegeometrie, die zu Beginn des Umspritzens mit der Zweitisolation exponiert in die Schmelze der Zweitisolation ragt, weist im Vergleich zu ihrer Masse eine große wärmeeinleitende Oberfläche auf, so dass es im Vergleich zu einer glatten Oberfläche der Erstisolation zu einem schnellen An- und/oder Aufschmelzen der Fügegeometrie und nach dem Erkalten zu einer stoffschlüssigen fluiddichten Verbindung von Erst- und Zweitisolation kommt.

Der erste Kunststoff und der zweite Kunststoff können dem Material nach gleich sein, so dass sich die Bezeichnung "erster Kunststoff" und "zweiter Kunststoff" lediglich auf den Zeitpunkt der Erzeugung bezieht. In alternativen Ausführungen können sich der erste Kunststoff und der zweite Kunststoff in Bezug auf das Polymermaterial unterscheiden. Falls der erste Kunststoff und/oder der zweite Kunststoff eine polymere Matrix und in der polymeren Matrix einen oder mehrere Füllstoffe aufweist oder jeweils aufweisen, können sich der erste Kunststoff und der zweite Kunststoff in Bezug auf das Material der polymeren Matrix und/oder in Bezug auf einen oder mehrere der Füllstoffe unterscheiden. Falls sich die beiden Kunststoffe in einem Polymerbestandteil und/oder einem Füllstoff voneinander unterscheiden und die Fügegeometrien in der jeweiligen Fügezone vollkommen miteinander verschmolzen sind, weist das Schmelzgefüge der Fügezone in Bezug auf diesen Polymerbestandteil und/oder in Bezug auf diesen Füllstoff einen kleineren Konzentrationsgradienten als am Grund der Zahnlücken auf.

Als Kunststoffe kommen sowohl Thermoplaste als auch Duroplaste in Betracht. Die Isolationen können jeweils thermoplastisch oder duroplastisch sein. Grundsätzlich kann auch eine duroplastische Erstisolation mit einer thermoplastischen Zweitisolation oder stattdessen eine thermoplastische Erstisolation mit einer duroplastischen Zweitisolation kombiniert werden.

Die Erstisolation und die Zweitisolation gemeinsam hüllen die Spulen in vorteilhaften Ausführungen ein, um sie elektrisch gegeneinander und gegen den Statorkern und somit gegen im Motorraum befindliches Fluid zu isolieren. Die Erstisolation kann die Statorzähne in Richtung auf die Zahnenden über die Spulen hinaus umgeben, Sie kann den Statorkern bis zu den Zahnenden überall einhüllen, beispielsweise hautförmig, so dass nur die Zahnenden jeweils zumindest an ihrer Lauffläche, die den Laufspalt begrenzt, von der Erstisolation frei sind. Die Zweitisolation kann den Statorkern und die Spulen einhüllen, so dass nur die Zahnenden jeweils zumindest an ihrer Lauffläche von der Zweitisolation frei sind, wobei Anschlusselemente für den elektrischen Anschluss der Spulen durch die Zweitisolation führen können.

In einer ersten Variante hüllt die Erstisolation den Statorkern bis unmittelbar zu den Laufflächen der Statorzähne ein und die Zweitisolation füllt die Zahnlücken bis unmittelbar zu den Laufflächen der Statorzähne, so dass die Laufflächen der Statorzähne und das in den Zahnlücken befindliche Isolationsmaterial bündig miteinander abschließen. Hierdurch kann eine Verwirbelung des im Laufspalt befindlichen Kühlfluids klein gehalten werden. In einer zweiten Variante steht das in den Zahnlücken befindliche Isolationsmaterial radial ein kleines Stück hinter den Laufflächen zurück, so dass die Laufflächen radial freigestellt sind. In der ersten Variante bilden die Laufflächen des Statorkerns und das in den Zahnlücken befindliche Isolationsmaterial gemeinsam vorteilhafterweise eine glatte kreiszylindrische Lauffläche des Stators. In der zweiten Variante bilden die freigestellten Laufflächen des Statorkerns gemeinsam vorteilhafterweise eine über die Zahnlücken in Richtung auf den Rotor vorragende kreiszylindrische Lauffläche des Stators.

Der Rotor des Antriebsmotors und das Förderrad können koaxial und um die in diesem Fall gemeinsame Drehachse drehbar angeordnet sein. Der Rotor und der Antriebsmotor sind mittels einer Antriebswelle zur Übertragung von Drehmoment gekoppelt. Bevorzugt sind sie mit der Antriebswelle drehunbeweglich verbunden. Die Antriebswelle kann vorteilhafterweise als Hohlwelle gebildet sein.

Zur Kühlung des Antriebsmotors kann sich ein Kühlpfad für das Kühlfluid von einem Kühlpfadeinlass bis zu und durch den Laufspalt und/oder bis zu und durch den jeweiligen Kühlkanal des Stators und weiter bis zu einem Kühlpfadauslass erstrecken. Der Kühlpfadeinlass und der Kühlpfadauslass können in einen mittels des Förderrads förderbaren Hauptstrom des Fluid münden, um Fluid zur Kühlung des Antriebsmotors aus dem Hauptstrom abzuzweigen und durch den Motorraum wieder in den Hauptstrom zurückzuführen. Vorteilhafterweise werden der Kühlpfadeinlass in einem Bereich höheren Drucks und der Kühlpfadauslass in einem Bereich niederen Drucks im Hauptstrom so angeordnet, dass zwischen dem Kühlpfadeinlass und dem Kühlpfadauslass im Pumpenbetrieb eine Druckdifferenz besteht, die allein als treibende Kraft ausreicht, das Fluid auf dem Kühlpfad durch den Motorraum zu fördern.

Der Kühlpfadeinlass und/oder der Kühlpfadauslass kann oder können jeweils im Fördergehäuse münden, um Fluid zur Kühlung des Antriebsmotors innerhalb der Pumpe vom Hauptstrom abzuzweigen und/oder in den Hauptstrom zurückzuführen. So kann der Kühlpfadeinlass im Fördergehäuse in einem Fluidbereich höheren Drucks und/oder der Kühlpfadauslass im Fördergehäuse in einem Fluidbereich niederen Drucks münden. Der Kühlpfadeinlass kann insbesondere in die Förderkammer münden, beispielsweise stromab des Förderrads im Bereich des Auslasses oder zwischen dem Förderrad und dem Auslass. Der Kühlpfadauslass kann vorteilhafterweise stromauf des Förderrads im Bereich des Einlasses oder insbesondere an der Vorderseite des Förderrads in Richtung auf den Einlass münden.

Der Kühlpfad kann sich zwischen dem Bereich höheren Drucks und dem Bereich niederen Drucks in einen ersten Pfad, der durch den Laufspalt führt, und einen zweiten Pfad, der durch den jeweiligen Kühlkanal des Stators führt, verzweigen. Er kann sich stromab des Kühlpfadeinlasses in die zwei Pfade verzweigen. Bevorzugter verzweigt er sich noch im Bereich höheren Drucks, indem dort ein erster Kühlpfadeinlass und hiervon separat ein zweiter Kühlpfadeinlass vorgesehen sind, wobei Fluid über den ersten Kühlpfadeinlass zum Laufspalt und über den zweiten Kühlpfadeinlass zu den Kühlkanälen des Stators strömt.

Die beiden Kühlpfade können im Bereich niederen Drucks zusammenführen. Bevorzugt führen sie noch im Motorraum stromab des Laufspalts und der Kühlkanäle zusammen, so dass das Fluid über den für beide Pfade gemeinsamen Kühlpfadauslass aus dem Motorraum abgeführt und vorzugsweise in den Hauptstrom zurückgeführt wird. Ist die Antriebswelle eine Hohlwelle, kann das Fluid vorteilhafterweise über die Antriebswelle zurückgeführt werden. Dabei kann die Antriebswelle oder das Förderrad den Kühlpfadauslass bilden.

Die Zweitisolation umgibt den bewickelten Statorkern in vorteilhaften Ausführungen über den äußeren Umfang. Sie kann über die Hüllfunktion hinaus vorteilhafterweise zu einem Motorgehäuse weitergebildet sein. Das Fördergehäuse kann direkt mit diesem Motorgehäuse gefügt sein, beispielsweise mittels Schraubverbindung.

Die Zweitisolation kann ein Anschlussgehäuse für ein oder mehrere elektrische Anschlusselemente bilden, über das oder die der Antriebsmotor an ein externes System zur Energieversorgung und/oder Steuerung anschließbar ist. Das Anschlussgehäuse kann für eine Steckverbindung mit einem korrespondierend geformten Anschluss eingerichtet sein. Das jeweilige Anschlusselement kann in der Zweitisolation eingebettet und dadurch relativ zum Motorgehäuse und dem Anschlussgehäuse positioniert und fixiert sein. So kann das jeweilige elektrische Anschlusselement einen inneren Anschlusskontakt, einen äußeren Anschlusskontakt und einen Verbindungsabschnitt aufweisen, der den inneren Anschlusskontakt mit dem äußeren Anschlusskontakt verbindet. Der Verbindungsabschnitt kann in der Zweitisolation eingebettet sein. Der innere Anschlusskontakt kann für den elektrischen Anschluss einer Motorelektronik aus der Zweitisolation ragen. Der äußere Anschlusskontakt kann für den elektrischen Anschluss an das externe System im Anschlussgehäuse aus der Zweitisolation ragen.

Die Zweitisolation kann eine Montagegeometrie umfassen, die der Montage der Pumpe am gewünschten Einbauort dient. Die Montagegeometrie kann unmittelbar bei einer Urformung der Zweitisolation geformt werden. Sie kann ein oder mehrere Montageelemente, beispielsweise einen oder mehrere vorragende Montageflansche, aufweisen. Die Montagegeometrie kann insbesondere für eine Montage der Pumpe mittels Schraubverbindung eingerichtet sein. Die Montagegeometrie kann beispielsweise einen oder mehrere freigestellte Durchgänge für ein oder jeweils ein Befestigungselement, wie etwa eine Schraube, bilden. Die Montagegeometrie kann ein oder mehrere elastische Fügeelemente umfassen, die mit der Zweitisolation gefügt sind, beispielsweise form- und/oder reibschlüssig, und im montierten Zustand der Pumpe unmittelbar mit einem zugeordneten Befestigungselement im Kontakt stehen. Im montierten Zustand der Pumpe wirkt das jeweilige elastische Fügelement als Dämpfer zwischen einem Aggregat, an dem die Pumpe montiert ist, beispielsweise einem Antriebsmotor oder Getriebe oder einer Karosserie eines Kraftfahrzeugs, und der Pumpe.

Die Zweitisolation kann über die Hüllfunktion hinaus vorteilhafterweise zu einer Drehlagerstruktur zur Drehlagerung des Rotors weitergebildet sein, wobei die Zweitisolation und die Drehlagerstruktur vorteilhafterweise per Urformung in einem Stück, beispielsweise als Gussteil aus Kunststoff, geformt sind. Die Drehlagerstruktur kann einen oder mehrere Durchgänge aufweisen. Der vorstehend erläuterte Kühlpfad kann sich stromauf oder stromab des Laufspalts durch den jeweiligen Durchgang der Drehlagerstruktur erstrecken.

Eine Motorelektronik mit einer Platine und darauf angeordneten elektronischen Komponenten zur Energieversorgung und Steuerung des Antriebsmotors kann integraler Bestandteil der Pumpe sein. Die Zweitisolation kann mit Fügeelementen geformt sein, die mit der Platine in einem Fügeeingriff sind und die Platine durch den Fügeeingriff relativ zum Stator fixieren. Diese Fügeelemente können beispielsweise stiftförmig an einer vom Förderrad abgewandten Rückseite des Stators vorragen und die Platine durchragen. Die Fügeelemente können Verbindungsnieten bilden, so dass die Platine mittels Nietverbindung, beispielsweise Heißnietverbindung, mit dem Stator gefügt ist.

Die Zweitisolation wird vorteilhafterweise in einem Verfahren der Urformung in einem Stück, beispielsweise als Gussteil aus Kunststoff, geformt. Hinsichtlich der vorstehend erläuterten Zusatzfunktionalität bedeutet dies, dass die Zweitisolation vorteilhafterweise gemeinsam mit einem den Statorkern umgebenden Motorgehäuse und/oder gemeinsam mit einem Anschlussgehäuse für den elektrischen Anschluss an ein externes System zur Energieversorgung und/oder Steuerung des Antriebsmotors und/oder gemeinsam mit einer Drehlagerstruktur zur Radiallagerung einer mit dem Rotor und/oder dem Förderrad drehunbeweglich verbundenen Antriebswelle in dem Verfahren der Urformung geformt sein kann.

Die Zusatzfunktionalitäten der Zweitisolation können vorteilhaft jeweils allein und vorteilhafter in jeder Kombination verwirklicht sein. Jede der Zusatzfunktionalitäten kann ohne das Merkmal 1.8 verwirklicht sein, d.h. die Erstisolation und/oder die Zweitisolation kann oder können auch die Lauffläche des Stators bedecken. Ebenso kann jede der Zusatzfunktionalitäten ohne das Merkmal 1.9 verwirklicht sein, d.h. der Stator weist keine Kühlkanäle der erfindungsgemäßen Art oder weist überhaupt keine Kanäle für Fluid auf. Andererseits kann jede der Zusatzfunktionalitäten mit dem Merkmal 1.8 oder stattdessen mit dem Merkmal 1.9 des Anspruchs 1, d.h. ohne das jeweilige andere Merkmal, oder bevorzugt mit beiden Merkmalen 1.8 und 1.9 des Anspruchs 1 verwirklicht sein.

Die Pumpe kann beispielsweise als Kreiselpumpe, insbesondere als Radialkreiselpumpe, ausgeführt und das Förderrad ein Radialförderrad sein. Der Antriebsmotor kann als Außenläufer ausgeführt sein und der Rotor den Stator umgeben, so dass die Lauffläche des Stators eine Außenumfangsfläche ist. Vorzugsweise ist der Antriebsmotor jedoch ein Innenläufer und der Stator umgibt den Rotor, so dass die Lauffläche des Stators eine Innenumfangsfläche ist. Der Rotor ist vorzugsweise mit Permanentmagneten bestückt, kann aber stattdessen ebenfalls mit elektrischen Spulen versehen sein. Grundsätzlich können die Verhältnisse auch umgekehrt werden, so dass nur der Rotor mit elektrischen Spulen versehen und der Stator mit Permanentmagneten bestückt ist. In derartigen Ausführungen ersetzen die Permanentmagnete die Spulen des Stators. Die mittels der Kühlkanäle des Stators erzielbare Zusatzkühlung, zusätzlich zur Laufspaltkühlung, ist auch für derartige Abwandlungen vorteilhaft. Die Kühlkanäle können sich dann beispielsweise zwischen den Permanentmagneten des Stators in axialer Richtung durch den Stator erstrecken.

Die Pumpe kann insbesondere für eine Verwendung als Kühlmedienpumpe zur Förderung eines Wasser-/Glykol-Gemisches und/oder eines dielektrischen Wärmeträgeröls zur Kühlung oder zur Temperierung einer oder mehrerer Komponenten eines motorisch angetriebenen Fahrzeugs, wie eines Kraftfahrzeugs, eingerichtet sein. Spezieller kann sie in derartiger Verwendung zur Temperierung
- eines Verbrennungsmotors und/oder
- von Antriebsstrangkomponenten eines verbrennungsmotorischen Fahrzeug-Antriebsstrangs und/oder
- von Komponenten des Antriebsstrangs eines batterieelektrischen Fahrzeugs und/oder
- der Batteriezellen einer Traktionsbatterie eines Kraftfahrzeugs
eingerichtet sein. "Zur Temperierung" bedeutet, dass die Pumpe nur zur Kühlung oder nur zur Erwärmung oder bedarfsabhängig sowohl zur Kühlung als auch zur Erwärmung eingerichtet ist. Die Pumpe kann insbesondere als Kühlmedienpumpe zur Förderung eines dielektrischen Wärmeträgeröls zur Temperierung durch direkten Wärmeaustausch, d.h. zur direkten Kühlung und/oder direkten Erwärmung, der Batteriezellen einer Traktionsbatterie eines Kraftfahrzeugs eingerichtet sein.

Die Pumpe ist in vorteilhaften Ausführungen für eine drehzahlvariable Ansteuerung durch ein Fahrzeugsteuergerät oder Motorsteuergerät ausgeführt und kann vom Fahrzeugsteuergerät oder Motorsteuergerät in Abhängigkeit von einer oder mehreren Messgrößen, wie etwa der Außentemperatur und/oder einer Temperatur einer zu temperierenden Fahrzeugkomponente, angesteuert werden.

Die Erfindung betrifft auch ein Verfahren zur Herstellung eines Stators für einen elektrischen Antriebsmotor, vorzugsweise des Stators für den Antriebsmotor der hier offenbarten Pumpe. Das Verfahren umfasst zumindest die folgenden Schritte:
- Ein Statorkern, der zumindest im Wesentlichen radial zu einer Motorachse weisende Statorzähne mit freien Zahnenden und zwischen den Statorzähnen verbleibende Zahnlücken aufweist, wird mit einem elektrisch isolierenden ersten Kunststoff umspritzt, um eine Erstisolation zu bilden, welche die Statorzähne umgibt und die Zahnlücken vorzugsweise auskleidet. Dies kann auch als Erstumspritzung bezeichnet werden.
- Um die mit der Erstisolation versehenen Statorzähne werden elektrische Leitungen gewickelt, um elektrische Spulen zu bilden.
- Der Statorkern und die Spulen werden mit einem elektrisch isolierenden zweiten Kunststoff umspritzt, um eine Zweitisolation zu bilden, welche die Spulen und den Statorkern über die Spulen hinaus bis zu den Zahnenden einhüllt. Dies kann auch als Zweitumspritzung bezeichnet werden.
- Bei dem Spritzen der Zweitisolation werden im Bereich der Zahnlücken in axialer Richtung durch die Zweitisolation erstreckte Kühlkanäle zur Durchleitung eines der Kühlung des Stators dienenden Fluids geformt.
- An den Zahnenden weist der Stator Umfangs- bzw. Laufflächen zur Bildung eines Laufspalts mit einem Rotor des Antriebsmotors auf. Diese Laufflächen sind von der Erstisolation und der Zweitisolation frei. Hierzu können die Laufflächen bei der Erstumspritzung mit dem Kunststoff der Erstisolation und/oder bei der Zweitumspritzung mit dem Kunststoff der Zweitisolation zunächst ebenfalls umspritzt und der jeweilige Kunststoff an den Laufflächen in einem Nachbearbeitungsschritt entfernt werden. Vorteilhafterweise werden jedoch sowohl die Erstumspritzung als auch die Zweitumspritzung so ausgeführt, dass die Laufflächen schon bei der Erstumspritzung und auch bei der Zweitumspritzung vom jeweiligen Kunststoff frei bleiben.

Vorteilhafterweise wird die Erstisolation im Bereich der Zahnenden mit einer oder mehreren um den jeweiligen Statorzahn umlaufenden Fügegeometrien in Form einer oder mehrerer Abragungen und/oder Vertiefungen gespritzt. Beim Spritzen der Zweitisolation wird die jeweilige Fügegeometrie im Kontakt mit dem zweiten Kunststoff an- oder aufgeschmolzen, so dass die jeweilige Fügegeometrie im Falle des nur Anschmelzens nach dem Erkalten in die Zweitisolation eingreift oder im Falle des Aufschmelzens mit dem ersten Kunststoff mikroskopisch ein Mischgefüge bildet.

Auch in den nachstehend formulierten Aspekten werden Merkmale der Erfindung beschrieben. Die Aspekte sind in der Art von Ansprüchen formuliert und können diese ersetzen. In den Aspekten offenbarte Merkmale können die Ansprüche ferner ergänzen und/oder relativieren, Alternativen zu einzelnen Merkmalen aufzeigen und/oder Anspruchsmerkmale erweitern. In Klammern gesetzte Bezugszeichen beziehen sich auf nachfolgend in Figuren illustrierte Ausführungsbeispiele der Erfindung. Sie schränken die in den Aspekten beschriebenen Merkmale nicht unter den Wortsinn als solchen ein, zeigen andererseits jedoch bevorzugte Möglichkeiten der Verwirklichung des jeweiligen Merkmals auf.
1. Pumpe zur Förderung eines Fluids, beispielsweise eines Kühlfluids und/oder eines Schmierfluids, die Pumpe umfassend:
   1.1 ein Fördergehäuse (1, 4) mit einem Einlass (2) und einem Auslass (3) für das Fluid,
   1.2 ein im Fördergehäuse (1, 4) drehbares Förderrad (15) zur Förderung des Fluids vom Einlass (2) zum Auslass (3), und
   1.3 einen elektrischen Antriebsmotor mit einem um eine Motorachse (R) drehbaren Rotor (10), der mit dem Förderrad (15) für dessen Antrieb gekoppelt ist, und einem Stator (20), der mit dem Rotor (10) einen Laufspalt (14) um die Motorachse (R) bildet, der Stator (20) umfassend:
      1.4 einen Statorkern (21, 22, 23) mit zumindest im Wesentlichen radial zur Motorachse (R) weisenden Statorzähnen (21) und zwischen den Statorzähnen (21) verbleibenden Zahnlücken,
      1.5 elektrische Leitungen, die zur Bildung elektrischer Spulen (25) um die Statorzähne (21) gewickelt sind,
      1.6 eine Erstisolation (26), die zur elektrischen Isolierung zwischen dem jeweiligen Statorzahn (21) und der Spule (25), die den jeweiligen Statorzahn (21) umgibt, gebildet ist,
      1.7 und eine Zweitisolation (28), die zur elektrischen Isolierung benachbarter Spulen (25) in den Zahnlücken gebildet ist,
   1.8 wobei die Statorzähne (21) an Zahnenden (23) jeweils eine Lauffläche (24) aufweisen, die dem Rotor (10) über den Laufspalt (14) radial zugewandt gegenüberliegt und von der Erstisolation (26) und/oder der Zweitisolation (28) optional frei ist,
   1.9 und/oder sich in einer oder mehreren der Zahnlücken optional jeweils ein von Kühlmittel durchströmbarer Kühlkanal (29) in axialer Richtung durch die Zweitisolation (28) erstreckt.
2. Pumpe nach dem vorhergehenden Aspekt, wobei die Erstisolation (26) und die Zweitisolation (28) zumindest im Bereich der Zahnenden (23) um den jeweiligen Statorzahn (21) umlaufend undurchlässig für das Fluid verbunden sind, vorzugsweise stoffschlüssig, so dass die Spulen (25) vom Laufspalt getrennt sind.
3. Pumpe nach dem vorhergehenden Aspekt, wobei die Erstisolation (26) und die Zweitisolation (28) zumindest im Bereich der Zahnenden (23) in einer ringförmig um den jeweiligen Statorzahn (21) umlaufenden Fügezone undurchlässig für das Fluid stoffschlüssig verbunden, vorzugsweise verschmolzen, sind.
4. Pumpe nach einem der vorhergehenden Aspekte, wobei die Erstisolation (26) die Statorzähne (22) im Bereich der Spulen (25) umgibt, vorzugsweise die Zahnlücken bis jeweils nahe zu den Zahnenden (23) auskleidet, und zumindest im Bereich der Zahnenden (23) in einer ringförmig um den jeweiligen Statorzahn (21) umlaufenden Fügezone undurchlässig für das Fluid mit der Zweitisolation (28) stoffschlüssig verbunden, beispielsweise verschmolzen, ist.
5. Pumpe nach einem der vorhergehenden Aspekte, wobei die Erstisolation (26) und die Zweitisolation (28) im Bereich des Zahnendes (23) des jeweiligen Statorzahns (21) eine oder mehrere um den jeweiligen Statorzahn (21) umlaufende Fügegeometrien (27; 27a) aufweisen, die ineinandergreifen, um im Eingriff eine für das Fluid undurchlässige ringförmige Fügezone zu bilden.
6. Pumpe nach einem der vorhergehenden Aspekte, wobei die Erstisolation (26) und die Zweitisolation (27 im Bereich des Zahnendes (23) des jeweiligen Statorzahns (21) eine oder mehrere um den jeweiligen Statorzahn (21) umlaufende Abragungen (27; 27a) und korrespondierend eine oder mehrere Vertiefungen aufweisen, die ineinandergreifen, um im Eingriff eine für das Fluid undurchlässige ringförmige Fügezone zu bilden.
7. Pumpe nach einem der vorhergehenden Aspekte, wobei die Erstisolation (26) und die Zweitisolation (28) um den jeweiligen Statorzahn (21) im Bereich des Zahnendes (23) des jeweiligen Statorzahns (21) umlaufend eine ringförmige Fügezone bilden, in der sie im Vergleich zu einem am Grund der jeweiligen Zahnlücke gelegenen Fügebereich mit einem vergrößerten Flächenkontakt miteinander verschmolzen sind.
8. Pumpe nach einem der vorhergehenden Aspekte, wobei die Erstisolation (26) und die Zweitisolation (28) im Bereich der Zahnenden (23) eine um den jeweiligen Statorzahn (21) ringförmig erstreckte Fügezone bilden, in der ein Mikrogefüge der Erstisolation (26) und ein Mikrogefüge der Zweitisolation (28) tiefer als am Grund der Zahnlücken ineinandergreifen.
9. Pumpe nach einem der vorhergehenden Aspekte, wobei
   - die Erstisolation (26) aus einem ersten Kunststoff und die Zweitisolation (28) aus einem zweiten Kunststoff bestehen,
   - die Erstisolation (26) und die Zweitisolation (28) im Bereich der Zahnenden (23) in einer um den jeweiligen Statorzahn (21) ringförmig erstreckten Fügezone verschmolzen sind und
   - ein von dem ersten Kunststoff und dem zweiten Kunststoff gebildetes Mischgefüge in der ringförmigen Fügezone eine größere Tiefe (d) als am Grund der Zahnlücken aufweist.
10. Pumpe nach einem der vorhergehenden Aspekte, wobei die Erstisolation (26) und die Zweitisolation (28) im Bereich des Zahnendes (23) des jeweiligen Statorzahns (21) eine oder mehrere um den jeweiligen Statorzahn (21) umlaufende Abragungen (27; 27a) und korrespondierend eine oder mehrere Vertiefungen aufweisen, die dichtend ineinandergreifen, vorzugsweise kammartig.
11. Pumpe nach dem vorhergehenden Aspekt, wobei die jeweilige Abragung (27; 27a) einen äußeren Umfangsrand mit einer oder mehreren Kanten und/oder einer oder mehreren angeschmolzenen Kanten aufweist.
12. Pumpe nach einem der vorhergehenden Aspekte, wobei die Erstisolation (26) und die Zweitisolation (28) im Bereich des Zahnendes (23) des jeweiligen Statorzahns (21) kammartig ineinandergreifen, vorzugsweise um den jeweiligen Statorzahn (21) umlaufend.
13. Pumpe nach einem der vorhergehenden Aspekte, wobei sich die Zweitisolation (28) in den Zahnlücken in Richtung auf die Motorachse R über die Erstisolation (26) hinaus und die Erstisolation (26) umgreifend im Bereich der Zahnenden (23) bis zu den Flanken der Zahnenden (23) erstreckt.
14. Pumpe nach dem vorhergehenden Aspekt, wobei sich der erste Kunststoff und der zweite Kunststoff in Bezug auf einen polymeren Bestandteil und/oder in Bezug auf einen Füllstoff unterscheiden.
15. Pumpe nach einem der vorhergehenden Aspekte, wobei die Erstisolation (26) und die Zweitisolation (28) gemeinsam die Spulen (25) einhüllen und elektrisch gegeneinander und gegen den Statorkern (21, 22, 23) isolieren.
16. Pumpe nach einem der vorhergehenden Aspekte, wobei die Erstisolation (26) die Zahnlücken des Statorkerns (21, 22, 23) auskleidet.
17. Pumpe nach einem der vorhergehenden Aspekte, wobei der Stator (20) ein ringförmig um die Drehachse (R) erstrecktes Statorjoch (22) aufweist, von dem die Statorzähne (21) vorragen, und die Erstisolation (26) den von den Statorzähnen (21) abgewandten Umfang des Statorjochs (22) bedeckt.
18. Pumpe nach einem der vorhergehenden Aspekte, wobei die Erstisolation (26) den Statorkern (21, 22, 23) bis zu den Zahnenden (23) überall einhüllt, so dass nur die Zahnenden (23) jeweils zumindest an ihrer den Laufspalt (14) begrenzenden Lauffläche (24) von der Erstisolation (26) frei sind.
19. Pumpe nach einem der vorhergehenden Aspekte, wobei die Zweitisolation (28) den Statorkern (21, 22, 23) und die Spulen (25) einhüllt, so dass nur die Zahnenden (23) jeweils zumindest an ihrer den Laufspalt (14) begrenzenden Lauffläche (24) von der Zweitisolation (28) frei sind und Anschlussleitungen (25a) für die Spulen (25) durch die Zweitisolation (28) führen.
20. Pumpe nach einem der vorhergehenden Aspekte, wobei die Zweitisolation (28) den Statorkern (21, 22, 23) und die Spulen (25) bis zu den Zahnenden (23) überall einhüllt, so dass vom Statorkern (21, 22, 23) nur die Zahnenden (23) jeweils zumindest an ihrer den Laufspalt (14) begrenzenden Lauffläche (24) von der Zweitisolation (28) frei sind.
21. Pumpe nach einem der vorhergehenden Aspekte, wobei die Zweitisolation (28) die Zahnlücken des Statorkerns (21, 22, 23) zwischen den benachbarten Spulen (25) um den jeweiligen Kühlkanal (29) füllt.
22. Pumpe nach einem der vorhergehenden Aspekte, wobei die Zweitisolation (28) den jeweiligen Kühlkanal (29) unmittelbar umgibt, so dass sie unmittelbar die Umfangswand des jeweiligen Kühlkanals (29) bildet.
23. Pumpe nach einem der vorhergehenden Aspekte, wobei der jeweilige Kühlkanal (29) ein in axialer Richtung erstreckter Durchgang, vorzugsweise ein gerader, axialer Durchgang, durch die Zweitisolation (28) ist.
24. Pumpe nach einem der vorhergehenden Aspekte, wobei der jeweilige Kühlkanal (29) über die axiale Länge des Laufspalts (14) geschlossen ist.
25. Pumpe nach einem der vorhergehenden Aspekte, wobei die Zweitisolation (28) den jeweiligen Kühlkanal (29) über die axiale Länge des Laufspalts (14) unmittelbar umgibt, so dass sie über die axiale Länge des Laufspalts (14) unmittelbar die Umfangswand des jeweiligen Kühlkanals (29) bildet.
26. Pumpe nach einem der vorhergehenden Aspekte, wobei der jeweilige Kühlkanal (29) wenigstens in einem Teilabschnitt seiner axialen Länge nach radial innen, in Richtung auf die Motorachse (R), offen ist.
27. Pumpe nach einem der vorhergehenden Aspekte, wobei sich ein Kühlpfad für das Fluid von einem Kühlpfadeinlass (4a, 4b), der im Fördergehäuse (1, 4) in einem Bereich höheren Drucks mündet, durch den Laufspalt (14) und/oder den jeweiligen Kühlkanal (29) bis zu einem Kühlpfadauslass (16a), der im Fördergehäuse (1, 4) in einem Bereich niederen Drucks mündet, erstreckt.
28. Pumpe nach dem vorhergehenden Aspekt, wobei der Kühlpfad zwischen dem Bereich höheren Drucks und dem Bereich niederen Drucks in einen ersten Pfad, der durch den Laufspalt (14) führt, und einen zweiten Pfad, der durch den jeweiligen Kühlkanal (29) führt, verzweigt.
29. Pumpe nach einem der zwei unmittelbar vorhergehenden Aspekte, umfassend eine Antriebswelle (16), die den Rotor (10) des Antriebsmotors zur Übertragung von Drehmoment mit dem Förderrad (15) koppelt, wobei sich der Kühlpfad in axialer Richtung durch die Antriebswelle (16) erstreckt.
30. Pumpe nach dem vorhergehenden Aspekt, wobei die Antriebswelle (16) den Kühlpfadauslass (16a) bildet.
31. Pumpe nach einem der vorhergehenden Aspekte, wobei der Rotor (10) des Antriebsmotors und das Förderrad (15) koaxial und um die gemeinsame Drehachse (R) drehbar angeordnet sind.
32. Pumpe nach einem der vorhergehenden Aspekte, wobei der Rotor (10) des Antriebsmotors und das Förderrad (15) drehunbeweglich verbunden sind.
33. Pumpe nach einem der vorhergehenden Aspekte, wobei
   - das Förderrad (15) in einer Förderkammer und der Antriebsmotor (10, 20) in einem Motorraum angeordnet und mittels einer Antriebswelle (15) zur Übertragung von Drehmoment gekoppelt sind,
   - das Fördergehäuse (1, 4) an einer dem Motorraum axial zugewandten Stirnseite eine Rückwand (4) aufweist, und
   - die Antriebswelle (16) durch diese Rückwand (4) ragt.
34. Pumpe nach einem der vorhergehenden Aspekte, wobei der Rotor (10) des Antriebsmotors und das Förderrad (15) koaxial längs einer um die Drehachse (R) drehbaren Antriebswelle (16), die vorzugsweise als Hohlwelle gebildet ist, angeordnet sind.
35. Pumpe nach dem vorhergehenden Aspekt, wobei der Rotor (10) des Antriebsmotors und das Förderrad (15) jeweils drehunbeweglich mit der Antriebswelle (16) verbunden sind.
36. Pumpe nach einem der vorhergehenden Aspekte, wobei die Zweitisolation (28) ein Motorgehäuse (6) bildet.
37. Pumpe nach einem der vorhergehenden Aspekte, umfassend ein Motorgehäuse (6), das den Statorkern (21, 22, 23) und die Spulen (25) bis zu den Zahnenden (23) überall einhüllt, so dass nur die Zahnenden (23) jeweils zumindest an ihrer Lauffläche (24), die den Laufspalt (14) begrenzt, frei bleiben.
38. Pumpe nach dem vorhergehenden Aspekt, wobei die Zweitisolation (28) das Motorgehäuse (6) bildet.
39. Pumpe nach einem der vorhergehenden Aspekte, wobei die Zweitisolation (28) in einem Verfahren der Urformung in einem Stück, beispielsweise als Gussteil aus Kunststoff, geformt ist.
40. Pumpe nach einem der vorhergehenden Aspekte, wobei die Zweitisolation (28) gemeinsam mit einem den Statorkern (21, 22, 23) umgebenden Motorgehäuse (6) und/oder gemeinsam mit einem Anschlussgehäuse (7) für den elektrischen Anschluss an ein externes System zur Energieversorgung und/oder Steuerung des Antriebsmotors (10, 20) und/oder gemeinsam mit einer Drehlagerstruktur (8) zur Radiallagerung einer mit dem Rotor (10) und/oder dem Förderrad (15) drehunbeweglich verbundenen Antriebswelle (16) in einem Verfahren der Urformung in einem Stück, beispielsweise als Gussteil aus Kunststoff, geformt ist.
41. Pumpe nach dem vorhergehenden Aspekt, wobei das Motorgehäuse (6) ein oder mehrere in dem Verfahren der Urformung angeformte Fügeelemente (6a) zum Fügen mit dem Fördergehäuse (1, 4) und/oder in dem Verfahren der Urformung angeformte Fügeelemente (6b) zum Fügen mit einer mit elektronischen Komponenten (34) bestückten Platine (33) einer Motorelektronik umfasst.
42. Pumpe nach einem der zwei unmittelbar vorhergehenden Aspekte, wobei die Drehlagerstruktur (8) eine die Antriebswelle (16) umgebende zentrale Lagerstruktur und einen die zentrale Lagerstruktur am Stator (20) abstützenden, in radialer Richtung erstreckten Verbindungsträger umfasst.
43. Pumpe nach einem der vorhergehenden Aspekte, wobei die Zweitisolation (28) eine in einem Verfahren der Urformung angeformte Montagegeometrie (6c) zur Montage der Pumpe an einem Einbauort umfasst.
44. Pumpe nach einem der vorhergehenden Aspekte, wobei die Zweitisolation (28) ein Motorgehäuse (6) bildet und das Fördergehäuse (1, 4) direkt mit dem Motorgehäuse (6), vorzugsweise direkt mit der Zweitisolation (28), gefügt ist, beispielsweise mittels Schraubverbindung (6a, 9).
45. Pumpe nach einem der vorhergehenden Aspekte, wobei die Zweitisolation (28) ein Anschlussgehäuse (7) für ein oder mehrere elektrische Anschlusselemente (42, 46) bildet und der Stator (20) über das Anschlussgehäuse (7) und das jeweilige Anschlusselement (42, 46) an ein externes System zur Energieversorgung und/oder eine Steuerung anschließbar ist, beispielsweise mittels Steckkontaktverbindung.
46. Pumpe nach dem vorhergehenden Aspekt in Kombination mit einem der Aspekte 36, 37, 40 und 44, wobei das jeweilige elektrische Anschlusselement (42, 46) in der Zweitisolation (28) eingebettet und dadurch relativ zum Motorgehäuse (6) und/oder dem Anschlussgehäuse (7) positioniert und fixiert ist.
47. Pumpe nach dem vorhergehenden Aspekt, wobei das jeweilige elektrische Anschlusselement (42, 46) einen inneren Anschlusskontakt (43), einen äußeren Anschlusskontakt (45) und einen Verbindungsabschnitt (44), der den inneren Anschlusskontakt (43) mit dem äußeren Anschlusskontakt (45) verbindet, aufweist, und wobei der Verbindungsabschnitt (44) in der Zweitisolation (28) eingebettet ist, der innere Anschlusskontakt (43) für den elektrischen Anschluss einer Motorelektronik (34) aus der Zweitisolation (28) ragt und der äußere Anschlusskontakt (45) für den elektrischen Anschluss an das externe System im Anschlussgehäuse (7) aus der Zweitisolation (28) ragt.
48. Pumpe nach einem der drei unmittelbar vorhergehenden Aspekte, wobei das jeweilige elektrische Anschlusselement (42, 46) in einem Abschnitt (44), der in der Zweitisolation (28) eingebettet ist, eine größere Rauigkeit, beispielsweise eine Riffelung, als in einem aus der Zweitisolation ragenden Bereich aufweist, um die Abdichtung im Bereich der Einbettung zu verbessern.
49. Pumpe nach einem der vorhergehenden Aspekte, umfassend eine Drehlagerstruktur (8) zur Drehlagerung des Rotors (10), wobei die Zweitisolation (28) und die Drehlagerstruktur (8) per Urformung in einem Stück, beispielsweise als Spritzgussteil aus Kunststoff, geformt sind.
50. Pumpe nach dem vorhergehenden Aspekt in Kombination mit Aspekt 27, wobei sich der Kühlpfad stromauf oder stromab des Laufspalts (14) durch einen oder mehrere Durchgänge (8a) der Drehlagerstruktur (8) erstreckt.
51. Pumpe nach einem der vorhergehenden Aspekte jeweils in Kombination mit den Aspekten 27 und 33, wobei sich der Kühlpfad stromauf des Laufspalts (14) und/oder des jeweiligen Kühlkanals (29) durch die Rückwand (4) des Fördergehäuses (1, 4) erstreckt.
52. Pumpe nach einem der vorhergehenden Aspekte jeweils in Kombination mit Aspekt 27 und einem der Aspekte 29, 33, 34 und 40, wobei sich der Kühlpfad stromab des Laufspalts (14) durch die Antriebswelle (16) erstreckt.
53. Pumpe nach einem der vorhergehenden Aspekte, umfassend eine Motorelektronik mit einer Platine (33) und darauf angeordneten elektronischen Komponenten (34) zur Energieversorgung und Steuerung des Antriebsmotors (10, 20), wobei die Zweitisolation (28) mit Fügeelementen (6b) geformt ist, die mit der Platine (33) in einem Fügeeingriff sind und die Platine (33) durch den Fügeeingriff relativ zum Stator (20) fixieren.
54. Pumpe nach dem vorhergehenden Aspekt, wobei die Fügeelemente (6b) stiftförmig an einer vom Förderrad (15) abgewandten Rückseite des Stators (20) vorragen und die Platine (33) durchragen.
55. Pumpe nach einem der zwei unmittelbar vorhergehenden Aspekte, wobei die Fügeelemente (6b) Verbindungsnieten bilden, so dass die Platine (33) mittels Nietverbindung, beispielsweise Heißnietverbindung, mit dem Stator (20) gefügt ist.
56. Pumpe nach einem der vorhergehenden Aspekte jeweils in Kombination mit einem der Aspekte 36, 37,40 und 44, umfassend:
   - eine Stirnwand (30), die das Motorgehäuse (6) an einer Stirnseite abschließt, und
   - eine Platine (33) mit einer Motorelektronik (34) zur Steuerung und/oder Energieversorgung des Stators (20),
   - wobei die Platine (33) an einer dem Stator (20) axial abgewandten Stirnseite der Stirnwand (33) angeordnet ist.
57. Pumpe nach dem vorhergehenden Aspekt, wobei das Motorgehäuse (6) Fügeelemente (6b) aufweist, die am Motorgehäuse (6) angeformt sind und durch die Stirnwand (30) und die Platine (33) ragen und Verbindungsnieten bilden, so dass die Stirnwand (30) und die Platine (34) mittels Nietverbindung, beispielsweise Heißnietverbindung, mit dem Motorgehäuse (6) gefügt sind.
58. Pumpe nach einem der vorhergehenden Aspekte, wobei das Förderrad (15) ein Radialförderrad ist.
59. Pumpe nach einem der vorhergehenden Aspekte, wobei das Fördergehäuse (1, 4) eine um die Drehachse (R) des Förderrads (15) spiralförmige Förderkammer bildet.
60. Pumpe nach einem der vorhergehenden Aspekte, wobei der Einlass (2) des Fördergehäuses (1, 4) das Fluid koaxial zur Drehachse (R) zum Förderrad (15) führt.
61. Pumpe nach einem der vorhergehenden Aspekte, wobei der Stator (20) den Rotor (10) umgibt.
62. Pumpe nach einem der vorhergehenden Aspekte, wobei der Laufspalt (14) eine radiale Laufspaltweite w, die radial zur Drehachse (R) zwischen der Lauffläche (24) eines der Statorzähne (23) und einem über den Laufspalt (14) gegenüberliegenden Umfang des Rotors (10) gemessen wird, und die Erstisolation (26) im Bereich der Zahnenden (23) eine Dicke D aufweist, wobei w < D oder w < 0.5•D.
63. Pumpe nach einem der vorhergehenden Aspekte, wobei
   - die Erstisolation (26) und die Zweitisolation (28) im Bereich der Zahnlücken radial hinter den Laufflächen (24) der Statorzähne (23) zurückstehen
      oder stattdessen
   - die Erstisolation (26) und die Zweitisolation (28) im Bereich der Zahnlücken bündig mit den Laufflächen (24) der Statorzähne (23) abschließen.
64. Pumpe nach einem der vorhergehenden Aspekte, wobei die Statorzähne (21) und die Zweitisolation (28), optional auch die Erstisolation (26), gemeinsam eine um den Rotor (10) erstreckte, zumindest im Wesentlichen kreisförmige Lauffläche (24, 28a) des Stators (21) bilden.
65. Pumpe nach einem der vorhergehenden Aspekte, wobei das Fördergehäuse (1, 4) eine Rückwand (4) aufweist, die axial zwischen dem Förderrad (15) und dem elektrischen Antriebsmotor (10, 20) angeordnet und mit der Zweitisolation (28) stoffschlüssig verbunden, vorzugsweise verschweißt ist.
66. Pumpe nach einem der vorhergehenden Aspekte, die als Kühlmedienpumpe zur Förderung eines Wasser-/Glykol-Gemisches und/oder eines dielektrischen Wärmeträgeröls zur Kühlung oder zur Temperierung (Kühlung und/oder Erwärmung)
   - eines Verbrennungsmotors und/oder
   - von Antriebsstrangkomponenten eines verbrennungsmotorischen Fahrzeug-Antriebsstrangs und/oder
   - von Komponenten des Antriebsstrangs eines batterieelektrischen Fahrzeugs und/oder
   - der Batteriezellen einer Traktionsbatterie eines Kraftfahrzeugs ausgeführt ist.
67. Pumpe nach einem der vorhergehenden Aspekte, die als Kühlmedienpumpe zur Förderung eines dielektrischen Wärmeträgeröls zur Direktkühlung (Kühlung/Temperierung) der Batteriezellen einer Traktionsbatterie eines Kraftfahrzeugs ausgeführt ist.
68. Pumpe nach einem der vorhergehenden Aspekte, die für eine drehzahlvariable Ansteuerung durch ein Fahrzeugsteuergerät oder Motorsteuergerät ausgeführt ist und vom Fahrzeugsteuergerät oder Motorsteuergerät in Abhängigkeit von einer oder mehreren Messgrößen, wie etwa der Außentemperatur und/oder einer Temperatur einer zu temperierenden Fahrzeugkomponente, angesteuert wird.
69. Verfahren zur Herstellung eines Stators für einen elektrischen Antriebsmotor, vorzugsweise des Stators (20) für den Antriebsmotor der Pumpe nach einem der vorhergehenden Aspekte, mit folgenden Schritten:
   a. ein Statorkern (21, 22, 23), der zumindest im Wesentlichen radial zu einer Motorachse (R) weisende Statorzähne (21) mit freien Zahnenden (23) und zwischen den Statorzähnen (21) verbleibende Zahnlücken aufweist, wird mit einem elektrisch isolierenden ersten Kunststoff umspritzt, um eine Erstisolation (26) zu bilden, welche die Statorzähne (21) umgibt und die Zahnlücken vorzugsweise auskleidet,
   b. elektrische Leitungen werden um die mit der Erstisolation (26) versehenen Statorzähne (21) gewickelt, um elektrische Spulen (25) zu bilden,
   c. der Statorkern (21, 22, 23) und die Spulen (25) werden mit einem elektrisch isolierenden zweiten Kunststoff umspritzt, um eine Zweitisolation (28) zu bilden, welche die Spulen (25) und den Statorkern (21, 22, 23) über die Spulen (25) hinaus bis zu den Zahnenden (23) einhüllt, und
   d. bei dem Spritzen der Zweitisolation (28) werden im Bereich der Zahnlücken in axialer Richtung durch die Zweitisolation (28) erstreckte Kühlkanäle (29) zur Durchleitung eines der Kühlung des Stators dienenden Fluids geformt,
   e. wobei an den Zahnenden (23) eine Lauffläche (24) zur Bildung eines Laufspalts (14) mit einem Rotor (10) des Antriebsmotors von der Erstisolation (26) und der Zweitisolation (28) frei ist.
70. Verfahren nach dem vorhergehenden Aspekt, wobei die Erstisolation (26) und die Zweitisolation (28) so gespritzt werden, dass die Lauffläche (24) bei dem Spritzen frei vom ersten Kunststoff und frei vom zweiten Kunststoff bleibt.
71. Verfahren nach Aspekt 68, wobei an der Lauffläche (24) haftender Kunststoff nach dem Spritzen abgetragen wird, vorzugsweise spanend.
72. Verfahren nach einem der drei unmittelbar vorhergehenden Aspekte, wobei die Erstisolation (26) im Bereich der Zahnenden (23) mit einer oder mehreren um den jeweiligen Statorzahn (21) umlaufenden Fügegeometrien (27) in Form von einer oder mehreren Abragungen und/oder Vertiefungen (27) gespritzt wird und die jeweilige Fügegeometrie (27) beim Spritzen der Zweitisolation (28) im Kontakt mit dem zweiten Kunststoff an- oder aufgeschmolzen wird, so dass die jeweilige Fügegeometrie (27) im Falle des Anschmelzens in die Zweitisolation (28) eingreift oder im Falle des Aufschmelzens mit dem ersten Kunststoff mikroskopisch ein Mischgefüge bildet.
73. Verfahren nach einem der vier unmittelbar vorhergehenden Aspekte, wobei sich der erste Kunststoff und der zweite Kunststoff in Bezug auf einen polymeren Bestandteil und/oder in Bezug auf einen Füllstoff unterscheiden.
74. Verfahren nach einem der fünf unmittelbar vorhergehenden Aspekte, wobei ein etwaiger Kunststoffüberlauf nach dem Umspritzen mit dem zweiten Kunststoff an einer Innenumfangsfläche (24, 28a) mittels materialabtragender Nachbearbeitung entfernt wird, so dass die Lauffläche (24) an den Zahnenden (23) frei vom ersten Kunststoff und frei vom zweiten Kunststoff ist.

Nachfolgend wird ein Ausführungsbeispiel der Erfindung anhand von Figuren erläutert. Am Ausführungsbeispiel offenbar werdende Merkmale bilden jeweils einzeln und in jeder Merkmalskombination die Gegenstände der Ansprüche und der Aspekte sowie der vorstehend beschriebenen weiteren Ausgestaltungen vorteilhaft weiter. Es zeigen:
- Figur 1: eine erfindungsgemäße Pumpe in einer isometrischen Explosivdarstellung auf eine Vorderseite und in einer isometrischen Explosivdarstellung auf eine Rückseite der Komponenten der Pumpe;
- Figur 2: die Pumpe in einem ersten Längsschnitt;
- Figur 3: die Pumpe in einem zweiten Längsschnitt;
- Figur 4: die Pumpe in einem Querschnitt;
- Figur 5: ein Detail der Figur 4;
- Figur 6: einen mit Spulen bewickelten Statorkern eines elektrischen Antriebsmotors der Pumpe;
- Figur 7: ein Detail der Figur 6;
- Figur 8: einen Stator des Antriebsmotors in einer Isometrie auf die Vorderseite des Stators;
- Figur 9: den Stator in einer Isometrie auf die Rückseite;
- Figur 10: den Stator in einer isometrischen Explosivdarstellung;
- Figur 11: den Stator mit aus dem Verbund gelösten elektrischen Anschlusselementen;
- Figur 12: eine Fügeverbindung zum Fixieren einer mit elektronischen Komponenten bestückten Platine;
- Figur 13: einen Zahnlückenbereich des Stators mit einer modifizierten Zweitisolation;
- Figur 14: das Detail X der Figur 13;
- Figur 15: das Detail X der Figur 13 mit einer modifizierten Fügegeometrie; und
- Figur 16: eine Isometrie eines modifizierten Motorgehäuses.

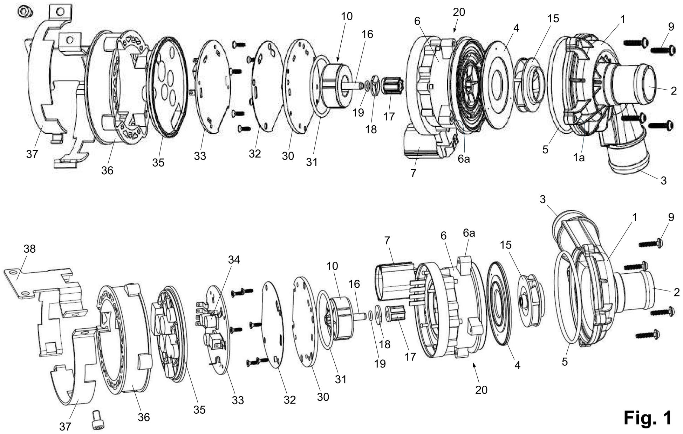

Figur 1 zeigt eine erfindungsgemäße Pumpe in zwei Explosivdarstellungen, oben in einer Isometrie auf eine Vorderseite und unten in einer Isometrie auf eine Rückseite der Komponenten der Pumpe. Die Pumpe gliedert sich funktional in einen Förderabschnitt mit einem Förderrad 15, einen Antriebsabschnitt mit einem elektrischen Antriebsmotor, der einen Rotor 10 und einen Stator 20 umfasst, und einen Elektronikabschnitt mit einer Platine 33 und Elektronikkomponenten 34 zur Versorgung und Steuerung des Antriebsmotors 10, 20. Diese funktionalen Abschnitte sind längs einer Motorachse des Antriebsmotors 10, 20 in einem mehrteiligen Gehäuse integriert hintereinander angeordnet.

Der Förderabschnitt umfasst ein Fördergehäuse mit einem Gehäuseteil 1 und einer Rückwand 4, die im zusammengebauten Zustand der Pumpe den Förderabschnitt vom Antriebsabschnitt trennt. Das Gehäuseteil 1 weist einen Einlass 2 und einen Auslass 3 für ein zu förderndes Fluid auf. Das Gehäuseteil 1 und die Rückwand 4 umgeben gemeinsam eine Förderkammer, die den Einlass 2 mit dem Auslass 3 verbindet. Eine Ringdichtung 5 sorgt im zusammengebauten Zustand für die fluiddichte Verbindung zwischen dem Gehäuseteil 1 und der Rückwand 4. Das Gehäuseteil 1 kann selbst aus mehreren Teilen gefügt sein, bevorzugt ist es jedoch in einem einzigen Teil geformt. Das Förderrad 15 ist in der Förderkammer drehbar aufgenommen, um bei Drehantrieb durch den Antriebsmotor 10, 20 das Fluid vom Einlass 2 in und durch die Förderkammer zum Auslass 3 zu fördern.

Die Pumpe ist als Radialkreiselpumpe ausgeführt. Entsprechend sind das Förderrad 15 ein Radialförderrad und die Förderkammer eine Spiralkammer. Der Einlass 2 führt das Fluid in axialer Richtung zentral in die Förderkammer, während der Auslass 3 das Fluid in tangentialer Richtung ausleitet. Die Pumpe kann alternativ auch als Verdrängerpumpe, beispielsweise als innenachsige Verdrängerpumpe, wie etwa als Flügelzellenpumpe oder Zahnringpumpe, ausgeführt sein. Die Ausführung als Kreiselpumpe wird jedoch bevorzugt, insbesondere in Verwendungen als Kühlfluidpumpe.

Der Antriebsabschnitt umfasst ein Motorgehäuse 6, das den Stator 20 umgibt und mit diesem unbeweglich verbunden ist. Am Motorgehäuse 6 ist ein Anschlussgehäuse 7 angeformt. Das Anschlussgehäuse 7 umgibt elektrische Anschlusskontakte für den Anschluss des Antriebsmotors, im Ausführungsbeispiel des Stators 20, an eine externe Energieversorgung und/oder eine externe Steuerung, beispielsweise an eine Motorsteuerung eines Kraftfahrzeugs. Das Anschlussgehäuse 7 umgibt die Anschlusskontakte und ist gemeinsam mit diesem für eine Steckverbindung mit einem korrespondierenden Steckanschluss eingerichtet.

Im zusammengebauten Zustand der Pumpe ist der Rotor 10 in einem vom Motorgehäuse 6 umgebenen Motorraum aufgenommen. Die Rückwand 4 trennt den Motorraum von der Förderkammer. Der Antriebsmotor 10, 20 ist beispielhaft als Innenläufer ausgeführt. Der Rotor 10 wird somit vom Stator 20 umgeben. Mit dem Rotor 10 ist eine Antriebswelle 16 drehunbeweglich verbunden. Die Antriebswelle 16 bildet die Motorwelle des Antriebsmotors 10, 20. Eine Lagerbuchse 17 und eine Lagerscheibe 18 dienen der Drehlagerung der Antriebswelle 16 und somit auch des Rotors 10. Eine Ringdichtung 19 übernimmt im zusammengebauten Zustand eine Dichtfunktion zwischen dem Rotor 10 und der Lagerscheibe 18.

Eine Stirnwand 30 schließt den Motorraum an seiner dem Förderabschnitt axial abgewandten Rückseite ab. Die Stirnwand 30 dient als Trennwand zwischen dem Motorraum und einem Elektronikraum, in dem in der unteren Darstellung erkennbare Elektronikkomponenten 34 auf der Platine 33 angeordnet sind. Für eine fluiddichte Trennung des Elektronikraums vom Motorraum sorgt eine zwischen dem Motorgehäuse 6 und der Stirnwand 30 angeordnete Ringdichtung 31. Zwischen der Stirnwand 30 und der Platine 33 ist ein folienartiger Spaltfüller 32 vorgesehen. Im zusammengebauten Zustand bilden die scheibenförmige Stirnwand 30, der folienartige Spaltfüller 32 und die Platine 33 einen axialen Schichtaufbau. Ein Deckel 35 schließt den Elektronikraum an seiner Rückseite ab.

Im montierten Zustand liegen das Fördergehäuse 1, 4 und das Motorgehäuse 6 axial aneinander und sind unbeweglich miteinander gefügt. Beispielhaft werden sie mittels Schraubverbindung gefügt. Zum Herstellen der Fügeverbindung sind das Fördergehäuse 1, 4 mit Fügeelementen 1a und das Motorgehäuse 6 mit Fügeelementen 6a versehen, die mittels Fügeelementen 9, beispielhaft Schraubelementen, relativ zueinander unbeweglich gefügt werden. Die Fügeelemente 1a sind gerade axiale Durchgänge, die im Gehäuseteil 1 geformt sind. Die Fügeelemente 6a sind axiale Vertiefungen oder Durchgänge, die korrespondierend zu den Fügeelementen 1a am Motorgehäuse 6 geformt sind. Sind die Fügeelemente 9, wie im Ausführungsbeispiel, als Schraubelemente ausgeführt, können die Fügeelemente 6a mit passenden Innengewinden versehen sein. Vorteilhafterweise schneiden sich die Fügeelemente 9 jedoch in die Fügeelemente 6a ein und sorgen so für einen sicheren Halt des Fördergehäuses 1 am Motorgehäuse 6.

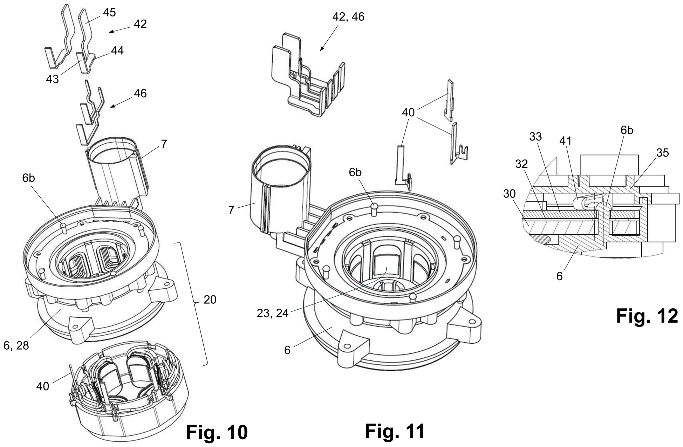

Der Schichtaufbau aus Stirnwand 30, Spaltfüller 32 und Platine 33 wird mit dem Motorgehäuse 6 unbeweglich gefügt, beispielsweise mittels Schraubverbindung oder vorzugsweise mittels einer weiter unten erläuterten und in Figur 12 erkennbaren nietartigen Verbindung. Nach dem Anordnen und Befestigen des Schichtaufbaus 30, 32, 33 und somit insbesondere der Platine 33 wird der Elektronikraum mittels des Deckels 35 verschlossen. Der Deckel 35 kann mit dem Motorgehäuse 6 vorteilhafterweise stoffschlüssig verbunden werden, beispielsweise mittels einer Reibschweißverbindung.

Zur Montage der Pumpe, beispielsweise im Motorraum eines verbrennungsmotorisch oder rein elektrisch oder kombiniert verbrennungsmotorisch und elektrisch angetriebenen Kraftfahrzeugs, ist eine Montagestruktur 37 vorgesehen. Die Montagestruktur 37 kann vorteilhafterweise über einen Dämpfer 36 mit der Pumpe verbunden sein. Der Dämpfer 36 ist im Ausführungsbeispiel als Dämpferring, beispielweise als Elastomerring, gebildet. Der Dämpfer 36 wird um den äußeren Umfang des Motorgehäuses 6 gelegt, und kann dann vorteilhafterweise mit einer gewissen elastischen Spannung das Motorgehäuse 6 umgeben. Der Dämpfer 36 ist in derartigen Ausführungen in Bezug auf einen Innenumfang an den Außenumfang des Motorgehäuses 6 mit einem gewissen Untermaß angepasst. Die Montagestruktur 37 bildet eine Manschette. Sie umfasst zwei relativ zueinander bewegliche Teile, im Ausführungsbeispiel zwei halbschalenförmige Strukturteile, die von der Seite an den Dämpfer 36 außen angelegt und mit geeigneten Befestigungsmitteln, beispielsweise Verschraubungsmitteln, mit einer gewissen Spannung angezogen werden, um das Motorgehäuse 6 und damit die Pumpe als solche über den Dämpfer 36 am Einbauort zu montieren. Die Montagestruktur 37 kann ein oder mehrere Fügeelemente 38 aufweisen, mittels dem oder denen die Montagestruktur 37 und damit die Pumpe am Einbauort, beispielsweise in einem Motorraum eines Kraftfahrzeugs, befestigt werden kann.

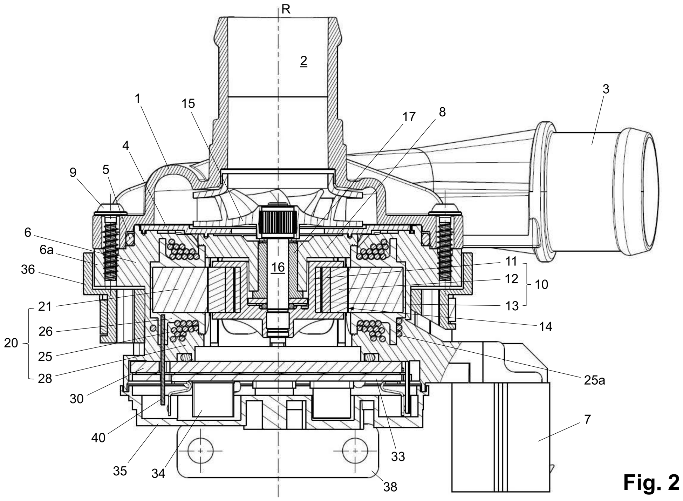

Figur 2 zeigt die Pumpe im zusammengebauten Zustand in einem zentralen Längsschnitt, in dem sich die Drehachse R der Antriebswelle 16 und des Rotors 10 erstreckt. Erkennbar ist die spiralförmige Förderkammer, die den zentralen axialen Einlass 2 mit dem tangentialen Auslass 3 verbindet. Die Förderkammer wird an ihrer dem Antriebsmotor 10, 20 zugewandten Rückseite von der Rückwand 4 abgeschlossen. In der Förderkammer ist das Förderrad 15 um die Drehachse R drehbar angeordnet. Bei Drehantrieb wird das Fluid über den Einlass 2 in Richtung auf die Stirnseite des Förderrads 15 angesaugt, wie von Radialförderpumpen bekannt nach radial außen umgelenkt und schließlich am äußeren Umfang des Förderrads 15 in tangentialer Richtung abgeführt und über den Auslass 3 ausgestoßen. Die Rückwand 4 liegt einer Rückseite des Förderrads 15 axial zugewandt gegenüber und bildet mit dem Förderrad 15 eine Dichtung, beispielweise eine Labyrinthdichtung, um die Förderkammer vom Motorraum zu trennen. Die Rückwand 4 kann mit dem Fördergehäuseteil 1 und dem Motorgehäuse 6 einen axialen Pressverbund bilden, also axial an das Motorgehäuse 6 gepresst sein. Ist die Rückwand 4 eine Kunststoffteil, kann sie zusätzlich oder stattdessen mit dem Motorgehäuse 6 verschweißt sein, beispielsweise mittels Ultraschallschweißung, Laserschweißung, Spiegelschweißung, Rotationsschweißung oder Vibrationsschweißung.

Das Förderrad 15 ist drehunbeweglich mit der Antriebswelle 16 und über diese drehunbeweglich mit dem Rotor 10 verbunden. Der Rotor 10 und das Förderrad 15 sind längs der Antriebswelle 16 koaxial zueinander angeordnet.

Das Motorgehäuse 6 bildet eine Drehlagerstruktur 8 zur radialen Abstützung der Antriebswelle 16, im Ausführungsbeispiel zur radialen Abstützung des Drehverbunds aus Rotor 10, Förderrad 15 und Antriebswelle 16. Die Drehlagerstruktur 8 umfasst einen buchsenförmigen Strukturbereich, der die Antriebswelle 16 in einem axialen Wellenabschnitt umgibt, um die Antriebswelle 16 und damit den Rotor 10 und das Förderrad 15 radial zu stützen. Dieser axiale Wellenabschnitt erstreckt sich zwischen einem vorderen Wellenabschnitt, in dem die Antriebswelle 16 drehunbeweglich mit dem Förderrad 15 verbunden ist, und einem hinteren Wellenabschnitt, in dem die Antriebswelle 16 drehunbeweglich mit dem Rotor 10 verbunden ist. Die Lageranordnung für die Antriebswelle 16 umfasst über die Drehlagerstruktur 8 hinaus die Lagerbuchse 17, die in den buchsenförmigen Strukturbereich der Drehlagerstruktur 8 ragt und vorteilhafterweise mit der Drehlagerstruktur 8 drehunbeweglich verbunden ist. Die Lageranordnung umfasst ferner die Lagerscheibe 18 (Figur 1) die der axialen Abstützung des Rotors 10 dient, und die Dichtung 19 (Figur 1), die sich um die Antriebswelle 16 erstreckt und zwischen einem Rotorträger 11 und der Lagerscheibe 18 angeordnet ist.

Der Rotor 10 umfasst den Rotorträger 11, der mit der Antriebswelle 16 drehunbeweglich verbunden ist und von der Antriebswelle 16 nach radial außen vorragt, einen Magnetehalter 12 und mehrere Permanentmagnete 13, die auf dem Rotorträger 11 um die Drehachse R verteilt angeordnet und vom Magnetehalter 12 in Position gehalten werden. Der Magnetehalter 12 kann vorteilhafterweise als Blechpaket aus axial aufeinanderliegenden Rotorblechen gebildet sein.

Die Drehlagerstruktur 8 weist einen radial erstreckten, beispielsweise ringscheibenförmigen Verbindungsträger auf, der den buchsenförmigen Strukturbereich mit dem radial weiter außen erstreckten Bereich des Motorgehäuses 6 steif verbindet. Die Drehlagerstruktur 8 ragt mit ihrem Verbindungsträger von radial außen nach innen, in Richtung auf die Antriebswelle 16, bis zum buchsenförmigen Strukturbereich und mit ihrem buchsenförmigen Strukturbereich in einen Ringspalt zwischen der Antriebswelle 16 und dem Rotor 10. Im Ergebnis wird eine geschachtelte, platzsparende Anordnung aus Antriebswelle 16, Rotor 10 und Drehlagerstruktur 8 erhalten. Zudem wird die Antriebswelle 16 vorteilhaft axial zwischen der drehunbeweglichen Verbindung mit dem Rotor 10 und der drehunbeweglichen Verbindung mit dem Förderrad 15 radial gelagert.

Der Stator 20 umgibt den Rotor 10. Der Stator 20 weist Statorzähne 21 mit elektrischen Spulen 25, eine Erstisolation 26 zwischen den Statorzähnen 21 und den Spulen 25 und eine Zweitisolation 28 auf. Die Erstisolation 26 und die Zweitisolation 28 hüllen die Spulen 25 fluiddicht ein. Die Spulen 25 sind über Kontaktierfahnen 40 und damit verbundene elektrische Anschlussleitungen 25a bestrombar. Zwischen dem Rotor 10 und dem Stator 20 erstreckt sich in Umfangsrichtung um die Drehachse R ein Laufspalt 14, den radial innen der Rotor 10 und radial außen der Stator 20 begrenzen.

Der Antriebsmotor 10, 20 ist als Nassläufer ausgeführt. Das vom Förderrad 15 förderbare Fluid wird zur Kühlung des Antriebsmotors 10, 20 genutzt. Hierzu wird ein kleiner Teilstrom des Fluids in einem Fluidbereich höheren Drucks vom geförderten Fluidstrom abgezweigt, durch den Motorraum geführt, um den Antriebsmotor 10, 20 sowie vorzugsweise auch die Stirnwand 30 und über diese die Platine 33 mit den Elektronikkomponenten 34 zu kühlen, und in einen Fluidbereich niederen Drucks zurückgeführt. Der abgezweigte Teilstrom wird von einer bei Förderung des Fluids sich einstellenden Druckdifferenz zwischen den beiden Fluidbereichen getrieben. Durch die Angaben "höheren Drucks" und "niederen Drucks" soll lediglich zum Ausdruck gebracht werden, dass zwischen den so charakterisierten Fluidbereichen eine Druckdifferenz besteht, die ausreicht, den Teilstrom zu erzeugen und aufrechtzuerhalten. Vorteilhafterweise wird der Teilstrom im Fördergehäuse 1, 4 von einem vom Förderrad 15 geförderten Hauptstrom abgezweigt und/oder im Fördergehäuse 1, 4 in den Hauptstrom zurückgeführt. Der Teilstrom kann insbesondere stromab des Förderrads 15 abgezweigt und/oder stromauf des Förderrads 15 zurückgeführt werden.

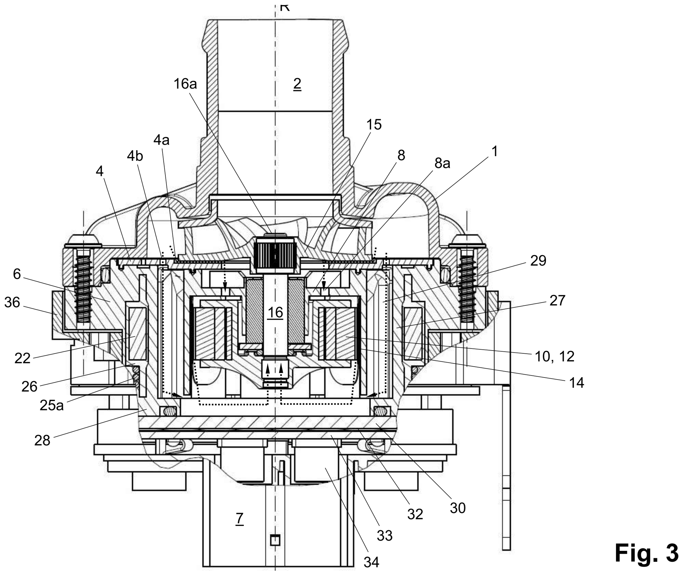

In Figur 3 ist ein Kühlpfad erkennbar, auf dem der Teilstrom des Fluids durch den Motorraum geführt wird. Der Kühlpfad erstreckt sich von einem Kühlpfadeinlass 4a, der im Fluidbereich höheren Drucks angeordnet ist, in den Motorraum und dort zum Laufspalt 14, durch den Laufspalt 14 zur Rückseite des Rotors 10 und von dort durch die Antriebswelle 16 bis zu einem Kühlpfadauslass 16a, der im Fluidbereich niederen Drucks mündet. Der Kühlpfadeinlass 4a ist auf dem Weg des vom Förderrad 15 geförderten Hauptstroms stromauf des Kühlpfadauslasses 16a angeordnet, so dass sich die zum Antreiben des abgezweigten Teilstroms ausreichende Druckdifferenz einstellt. Der Kühlpfadeinlass 4a führt durch einen Laufspalt, den das Förderrad 15 mit der Rückwand 4 bildet. Durch den Kühlpfadeinlass 4a gelangt Leckagefluid vom äußeren Umfang des Förderrads 15 in den Motorraum. Stromab des Laufspalts 14 gelangt das Fluid im Motorraum in Kontakt mit der Stirnwand 30 und kühlt über die Stirnwand 30 und den Spaltfüller 32 die Platine 33 und über diese auch die Elektronikkomponenten 34. Der Kühlpfadauslass 15a mündet an der Vorderseite des Förderrads 15 in Richtung auf den Einlass 2.

Der durch den Laufspalt 14 erstreckte Kühlpfad führt durch einen oder mehrere Durchgänge 8a der Drehlagerstruktur 8. Der jeweilige Durchgang 8a erstreckt sich stromauf des Laufspalts 14 durch den Verbindungsträger der Drehlagerstruktur 8.

Die Antriebswelle 16 ist als Hohlwelle ausgeführt. Das im Motorraum zwischen dem Rotor 10 und der Stirnwand 30 befindliche Fluid strömt an einem hinteren Stirnende der Antriebswelle 16 in die Antriebswelle 16 und tritt an einem vorderen Stirnende der Antriebswelle 16 in den Fluidbereich niederen Drucks aus. Im Ausführungsbeispiel erstreckt sich die Antriebswelle 16 durch das Förderrad 15 und der Kühlpfadauslass 16a ist am vorderen Stirnende der Antriebswelle 16 gebildet. In einer Abwandlung kann das Förderrad 15 den Kühlpfadauslass bilden.

Der Antriebsmotor 10, 20 wird nicht nur vom Laufspalt 14 ausgehend gekühlt. Zur Intensivierung der Kühlung wird zusätzlich Fluid aus dem Fluidbereich höheren Drucks durch den Stator 20 geführt. Der Stator 20 ist hierzu mit internen Kühlkanälen 29 versehen, die sich in axialer Richtung durch den Stator 20 erstrecken. Nach dem Durchströmen des Stators 20 kann dieser Teil des abgezweigten Fluids mit dem Fluid, das den Laufspalt 14 durchströmt hat, im Motorraum zusammengeführt und ebenfalls durch die Antriebswelle 16 am Kühlpfadauslass 16a in den Fluidbereich niederen Drucks zurückgeführt werden.

Die Kombination aus Laufspaltkühlung und interner Statorkühlung sorgt im Vergleich zu jeder der beiden Einzelmaßnahmen für eine intensivere Kühlung mit erhöhter und bedarfsgerechter Wärmeabfuhr. Dies ist auf die Kombination mehrerer Faktoren zurückzuführen. Der kühlende Volumenstrom kann erhöht und genauer an den Bedarf angepasst werden. Darüber hinaus vergrößern sich die am Wärmeaustausch beteiligten Flächen des Stators 20, die zudem ebenfalls genauer an den Bedarf angepasst gewählt werden können. Hinzu kommt, dass das Verhältnis von Laufspaltstrom zu Kühlkanalstrom zur Optimierung der Kühlleistung im Sinne einer genaueren Anpassung an die erforderliche Kühlleistung genutzt werden kann.

Die Kühlkanäle 29 sind im Ausführungsbeispiel über eine oder mehrere durch die Rückwand 4 führende Durchgänge 4b an den Fluidbereich höheren Drucks angeschlossen. Der eine oder die mehreren Durchgänge 4b gemeinsam bilden einen weiteren Kühlpfadeinlass. Somit gelangt Fluid zur Kühlung nicht nur aufgrund einer unvermeidlichen Leckage über den Laufspalt des Förderrads 15 zum Antriebsmotor 10, 20.

Der Kühlpfad des Ausführungsbeispiels umfasst zwei parallele Teilpfade, die im Fluidbereich höheren Drucks getrennt voneinander abzweigen und im Motorraum stromab des Laufspalts 14 und der Kühlkanäle 29 einerseits und stromauf oder an der Antriebswelle 16 andererseits zusammenlaufen. In Abwandlungen können sich die zwei Kühlpfade, der eine durch den Laufspalt 14 und der andere durch die internen Kühlkanäle 29 des Stators 20, aus dem Fluidbereich höheren Drucks bis in den Fluidbereich niederen Drucks separat voneinander erstrecken. **In** anderen Abwandlungen kann der durch den Motorraum führende Kühlpfad auch erst innerhalb des Motorraums in die zwei Teilpfade verzweigen. Der separate weitere Kühlpfadeinlass ermöglicht jedoch eine feinere, gleichwohl konstruktiv einfache Abstimmung auf den tatsächlichen Kühlbedarf, indem unvermeidbares Leckagefluid, das über den Kühlpfadeinlass 4a fließt, um zusätzliches Kühlfluid ergänzt wird, das über den weiteren Kühlpfadeinlass 4b fließt.

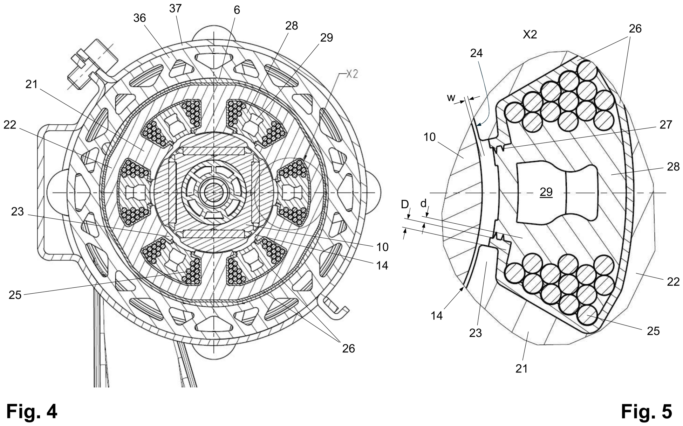

Wie insbesondere in den Figuren 4 und 5 zu erkennen ist, umfasst der Stator 20 einen Statorkern mit mehreren Statorzähnen 21, die von einem ringförmig um die Drehachse R erstreckten Statorjoch 22 in radialer Richtung bis zu freien Zahnenden 23 vorragen. Um die Statorzähne 21 sind elektrische Leitungen gewickelt, um die elektrischen Spulen 25 zu bilden. Die Statorzähne 21 dienen als Polschuhe. Der Statorkern 21, 22, 23 kann vorteilhafterweise als Blechpaket aus axial aufeinander geschichteten Statorblechen gebildet sein. Die Statorbleche können jeweils den in Figur 4 erkennbaren Querschnitt haben.

Der Stator 20 umfasst die bereits erwähnte Erstisolation 26, die jeden der Statorzähne 21 umgibt und die zwischen den Statorzähnen 21 verbleibenden Zahnlücken auskleidet. Die Erstisolation 26 ist zwischen dem Statorkern 21, 22, 23 und den Spulen 25 gebildet und dient der elektrischen Isolierung der Spulen 25. Die Erstisolation 26 überzieht den Statorkern 21, 22, 23 hautartig. Sie kann den Statorkern 21, 22, 23 vorteilhafterweise so weit einhüllen, dass vom Statorkern nur noch eine den Laufspalt 14 begrenzende Umfangs- bzw. Lauffläche 24 an den Zahnenden 23 frei bleibt. Vorteilhafterweise steht die Erstisolation 21 an den Zahnenden 23 hinter der Lauffläche 24 geringfügig zurück, hüllt den Statorkern 21, 22, 23 aber hiervon abgesehen vorteilhafterweise gänzlich und somit auch an den Stirnseiten und am äußeren Umfang ein. Ist der Statorkern 21, 22, 23 als Blechpaket ausgeführt, verhindert die Erstisolation 26, dass zwischen die Statorbleche des Blechpakets eindringendes Fluid mit den Spulen 25 in Kontakt gelangen kann.

In den Zahnlücken des Statorkerns 21, 22, 23 ist die Zweitisolation 28 geformt, die dazu dient, die Spulen 25 von dem durch den Laufspalt 14 strömenden Fluid elektrisch zu trennen. Gemeinsam hüllen die Erstisolation 26 und die Zweitisolation 28 die Spulen 25 ein und schirmen diese gegen einen Kontakt mit dem Fluid ab. Die Zweitisolation 28 umgibt die Spulen 25 daher auch an den beiden Stirnseiten. Des Weiteren bedeckt sie auch den äußeren Umfang des Statorkerns 21, 22, 23. Vorteilhafterweise hüllt die Zweitisolation 28 den Statorkern 21, 22, 23 und die Spulen 25 mit Ausnahme der den Laufspalt 14 begrenzenden Laufflächen 24 der Statorzähne 21 gänzlich und fluiddicht ein. Durch die Zweitisolation 28 führen lediglich elektrische Anschlussleitungen 24a, die aber von der Zweitisolation 28 fluiddicht umschlossen sind. Die Laufflächen 24 an den Zahnenden 23 der Statorzähne 21 bleiben auch vom Isolationsmaterial der Zweitisolation 28 frei. Vorteilhafterweise steht die Zweitisolation 21 an den Zahnenden 23 hinter der Umfangsfläche 24 des jeweiligen Statorzahns 21 geringfügig zurück, hüllt den Statorkern 21, 22, 23 aber hiervon abgesehen vorteilhafterweise gänzlich ein.

Indem weder die Erstisolation 26 noch die Zweitisolation 28 die den Laufspalt 14 begrenzenden Laufflächen 24 der Statorzähne 21 bedeckt, die Lauffläche 24 des jeweiligen Statorzahns 14 also von den Isolationen 26 und 28 frei bleibt, kann eine in Figur 5 mit "w" bezeichnete Weite des Laufspalts 14 vorteilhaft klein sein. Die Laufspaltweite w ist der in radialer Richtung gemessene lichte Abstand zwischen der Lauffläche 24 des jeweiligen Statorzahns 21 und dem Rotor 10. Variiert die Laufspaltweite w über den Umfang, weil der Rotor 10, wie etwa im Ausführungsbeispiel, radial erhabene Umfangsbereiche aufweist, wird die Laufspaltweite w an der radial engsten Stelle des Laufspalts 14 gemessen.

In vorteilhaften Ausführungen sind die Umfangsflächen 24 des Statorkerns 21 blank. Grundsätzlich können sie jedoch mit einem Schutzlack überzogen sein, wobei ein derartiger Schutzlack so dünn aufgetragen ist, dass der Schutzlackauftrag keine ins Gewicht fallende Vergrößerung der Laufspaltweite w verursacht. Jedenfalls ist ein etwaiger Schutzlack, sollte tatsächlich ein solcher aufgetragen sein, dünner als die hautartige Erstisolation 26.

Die Kühlkanäle 29 erstrecken sich in den Zahnlücken des Statorkerns 21, 22, 23 in axialer Richtung durch die Zweitisolation 28. Insbesondere kann sich in jeder der Zahnlücken jeweils einer der Kühlkanäle 29 durch die Zweitisolation 28 erstrecken. Die Zweitisolation 28 umgibt den jeweiligen Kühlkanal 29 endlos umlaufend und bildet unmittelbar die Kanalwand des jeweiligen Kühlkanals 29. Die Kühlkanäle 29 dienen einer intensivierten Kühlung der Spulen 25 aus der jeweiligen Zahnlücke heraus in Richtung auf die benachbarten Statorzähne 21. Die Spulen 25 und der Statorkern 21, 22, 23 können somit einerseits vom Laufspalt 14 und andererseits von den Kühlkanälen 29 ausgehend intensiv und effektiv gekühlt werden. Ist der Statorkern 21, 22, 23 als Blechpaket ausgeführt, kann Fluid aus dem Laufspalt 14 zwischen den Statorblechen in das Blechpaket ein- und bis zur Erstisolation 26 vordringen und für einen noch effektiveren Kühleffekt sorgen.

Die Erstisolation 26 und die Zweitisolation 28 verhindern gemeinsam, dass Fluid zu den Spulen 25 gelangen kann. Zur Abschirmung der Spulen 25 sind die Erstisolation 26 und die Zweitisolation 28 im Kontakt miteinander zumindest im Bereich der Zahnenden 23 um den jeweiligen Statorzahn 21 endlos umlaufend für das Fluid undurchlässig miteinander gefügt. So kann die Zweitisolation 28 im Kontakt beispielsweise einen gewissen Druck auf die Erstisolation 26 in Richtung auf den Statorkern 21, 22, 23 ausüben und dadurch mittels Kraftschluss für die erforderliche Dichtheit sorgen. Stattdessen oder zusätzlich können die Isolationen 26 und 28 stoffschlüssig, beispielsweise verklebt und/oder kontaktflächennah verschmolzen oder mittels Haftvermittler gefügt sein. Im Bereich der Zahnenden 23 können die Isolationen 26 und 28 um den jeweiligen Statorzahn 21 endlos umlaufende Fügegeometrien aufweisen, die ineinandergreifen und dadurch die Dichtigkeit durch Formschluss verbessern. Auch dieses Fügemerkmal kann mit einer stoffschlüssigen und/oder kraftschlüssigen Verbindung kombiniert werden. Die beiden Isolationen 26 und 28 können im gegenseitigen Kontakt überall stoffschlüssig und/oder kraftschlüssig miteinander gefügt sein. In bevorzugten Ausführungen sind die Erstisolation 26 und die Zweitisolation 28 aber zumindest in einer besonderen Fügezone, die sich zwischen den Spulen 25 und dem Laufspalt 14 ringförmig um den jeweiligen Statorzahn 21 erstreckt, durch ein besonderes Fügemerkmal miteinander gefügt.

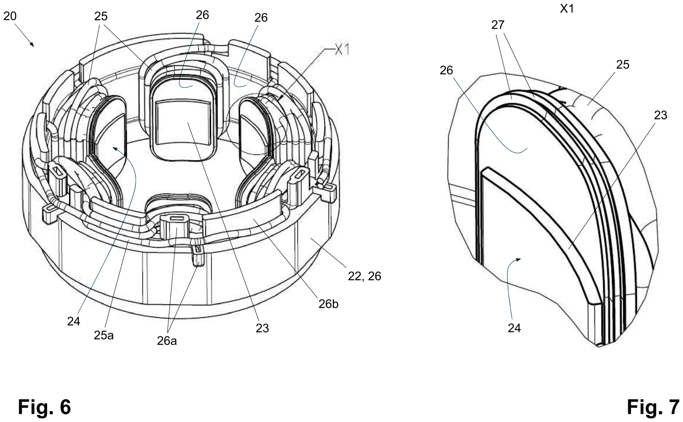

Figur 6 zeigt den Statorkern 21, 22, 23 mit den Spulen 25 und der Erstisolation 26, aber noch vor Herstellung der Zweitisolation 28. In Figur 7 ist als Detail aus Figur 6 eines der Zahnenden 23 vergrößert dargestellt. Die Erstisolation 26 hüllt den Statorkern 21, 22, 23 bis nahe zu den Zahnenden 23 überall hautartig ein. "Bis nahe zu den Zahnenden" bedeutet, dass die Erstisolation 26 den Statorkern 21, 22, 23 in Richtung auf die Zahnenden 23 über die Spulen 25 hinaus einhüllt und zwischen den Spulen 25 und den Zahnenden 23 ausreichend Kontaktfläche für die fluiddichte Verbindung mit der noch herzustellenden Zweitisolation 28 zur Verfügung steht. An den Zahnenden 23 bleibt jeweils zumindest die Lauffläche 24 von der Erstisolation 26 frei.

Um die Abschirmung der Spulen 25 mit erhöhter Sicherheit zu gewährleisten, weist die Erstisolation 26 in der vorstehend schon diskutierten Fügezone, die sich zwischen den Spulen 25 und dem Laufspalt 14 ringförmig um den jeweiligen Statorzahn 21 erstreckt, als besonderes Fügemerkmal pro Statorzahn 21 mehrere ringförmig nebeneinander um den jeweiligen Statorzahn 21 erstreckte Fügegeometrien 27 jeweils in Form einer vom Statorzahn 28 vorragenden, endlos umlaufenden, rippenartigen Abragung auf. Die jeweilige Fügegeometrie 27 ragt um mehr als die halbe Dicke der Erstisolation 25 von deren sonst makroskopisch glatten Oberfläche vor.

In Figur 5 sind die Dicke D der Erstisolation 26 und die Höhe(n) d der Fügegeometrie(n) 27 angegeben. Zweckmäßigerweise weist die jeweilige Fügegeometrie 27 jeweils eine auf den benachbart glatten Oberflächenbereich gemessene Höhe d auf, die größer als 0.2•D oder größer als 0.4•D ist. Vorteilhaft ist, wenn die Höhe d kleiner als 3•D oder kleiner als 2•D ist.

Die Erstisolation 26 ist aus einem elektrisch isolierenden Kunststoff geformt. Vorteilhaft ist, wenn der Kunststoff thermisch gut leitet. Der Kunststoff kann reines Polymermaterial oder vorteilhafterweise gefülltes Polymermaterial sein. Bei dem Kunststoff kann es sich um einen thermoplastischen oder duroplastischen Kunststoff handeln. Die Erstisolation 26 kann insbesondere im Spritzguss geformt werden. Hierzu wird der Statorkern 21, 22, 23 in eine Spritzgießform eingelegt und mit dem Kunststoff umspritzt. Nach dem Erstarren bildet dieser Kunststoff die Erstisolation 26 in Form einer Erstumspritzung. Die Fügegeometrien 27 werden zweckmäßigerweise direkt beim Spritzgießen in der Gießform geformt.

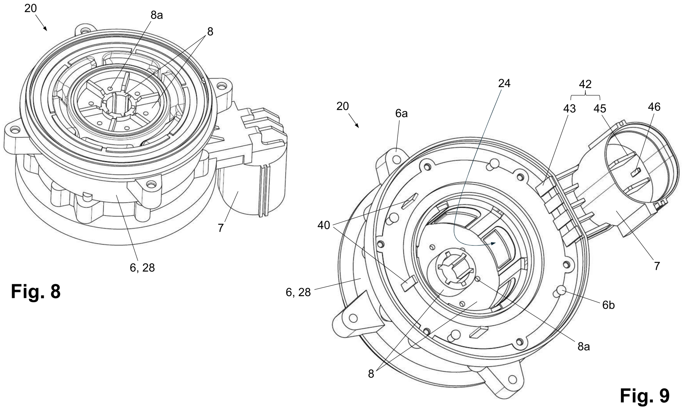

Vor dem Spritzgießen können Kontaktierfahnen 40 (Figuren 2, 9 und 10) ebenfalls in der Spritzgießform positioniert und dementsprechend gemeinsam mit dem Statorkern 21 mit dem Kunststoff der Erstisolation 26 umspritzt und dadurch in der erforderlichen Position fixiert werden. Die Kontaktierfahnen 40 sind in Figur 6 ausgeblendet. Erkennbar sind nur die vom Kunststoff der Erstisolation 26 gebildeten Haltegeometrien 26a, die jeweils eine der Kontaktierfahnen 40 in einem Halteabschnitt der jeweiligen Kontaktierfahne umgeben, wobei die jeweilige Kontaktierfahne nach der Bildung der Erstisolation 26 ihrer Haltegeometrie 26a für den Anschluss an die Motorelektronik nach außen vorragt und für die Konnektierung mit den Spulen 25 in einem inneren Abschnitt freibleibt. In Figur 2 sind zwei der Kontaktierfahnen 40 erkennbar. In Figur 9 ragen sie aus der Zweitisolation 28 vor. Figur 10 zeigt den mit der Erstisolation 26 umspritzten Statorkern zusammen mit den fixierten Kontaktierfahnen 40.

Der Statorkern 21, 22, 23 kann beim Spritzgießen vollständig mit dem Kunststoff der Erstisolation 26 umhüllt und in einem zusätzlichen Verfahrensschritt an den Umfangsflächen 24 wieder freigelegt werden. Bevorzugter bleiben die Umfangsflächen 24 beim Spritzen jedoch vom Kunststoff der Erstisolation 26 frei. Hierzu ist es hilfreich, wenn die Erstisolation 26 direkt beim Spritzen ein kleines Stück hinter den Umfangsflächen 24, also den späteren Laufflächen 24, zurücksteht, wie dies am besten in den Detaildarstellungen der Figuren 5 und 7 erkennbar ist. Hierdurch kann der Bildung sogenannter Schwimmhäute entgegengewirkt werden.

Zur Herstellung der Spulen 25 wird der mit der Erstisolation 26 versehene, im Ausführungsbeispiel umspritzte, Statorkern 21, 22, 23 mit elektrischem Leitungsmaterial bewickelt. Die so erhaltenen Spulen 25 sind über die Kontaktierfahnen 40 (Figuren 2, 9 und 10), die am äußeren Umfang des Statorjochs 22 von den Haltegeometrien 26a vorragen und über die elektrischen Anschlussleitungen 25a mit den Spulen 25 verbunden sind, bestrombar. Die Spulen 25 werden vor Herstellung der Zweitisolation 28 noch mit den Kontaktierfahnen 40 konnektiert. Die Konnektierung kann beispielsweise mittels Widerstandsschweißen erfolgen.

Gemeinsam mit der Erstisolation 26 kann auch eine Haltegeometrie 26b für die Anschlussleitungen 25a geformt werden, zweckmäßigerweise aus dem Kunststoff der Erstisolation 26. Die Haltegeometrie 26b kann so geformt sein, dass die Anschlussleitungen 25a von den Spulen 25 an einem äußeren Umfang der Haltegeometrie 26a anliegen und in Umfangsrichtung längs des äußeren Umfangs zur jeweils zugeordneten Kontaktierfahne 40 geführt werden. Die Kontaktierfahnen 40 können bei Formung der Erstisolation 26 mit dem Kunststoff der Erstisolation umspritzt und dadurch in Position fixiert werden.

Der bewickelte und mit den Kontaktierfahnen 40 versehene Statorkern 21, 22, 23 wird in einem weiteren Schritt zur Herstellung der Zweitisolation 28 in einer weiteren Spritzgussform ein zweites Mal umspritzt, dieses Mal mit dem Kunststoff der Zweitisolation 28, so dass die Spulen 25 vollständig und sicher gegen einen Zutritt des im Motorraum befindlichen Fluids abgeschirmt sind. Aus der Zweitisolation 28 ragen nach dieser zweiten Umspritzung lediglich noch die Kontaktierfahnen 40 heraus.

Die Zweitisolation 28 ist ebenfalls aus einem elektrisch isolierenden Kunststoff geformt. Vorteilhaft ist, wenn der Kunststoff der Zweitisolation 28 thermisch gut leitet. Der Kunststoff der Zweitisolation 28 kann reines Polymermaterial oder vorteilhafterweise gefülltes Polymermaterial sein. Bei dem Kunststoff kann es sich um einen thermoplastischen oder duroplastischen Kunststoff handeln.

Die Figuren 8 und 9 zeigen den Stator 20 nach der Umspritzung mit dem Kunststoff der Zweitisolation 28. Dabei ist Figur 8 eine Isometrie auf die dem Förderrad 15 (Figur 2) zugewandte Vorderseite und Figur 9 auf die dem Förderrad 15 abgewandte Rückseite des Stators 20. Durch diese Zweitumspritzung werden die Spulen 25 und der Statorkern 21, 22, 23 mit dem Kunststoff der Zweitisolation 28 allseits fluiddicht eingehüllt, so dass lediglich die Zahnenden 23 oder zumindest deren Umfangs- bzw. Lauffläche 24 von der Zweitisolation 28 freibleiben. Bei der Zweitumspritzung werden zugleich mit der Zweitisolation 28 das Motorgehäuse 6, das Anschlussgehäuse 7 und die Drehlagerstruktur 8 in einem Stück aus dem gleichen Kunststoff geformt.

Die Drehlagerstruktur 8 mit ihrem zentralen buchsenförmigen Strukturbereich und der ringscheibenförmige Verbindungsträger, der den buchsenförmigen Strukturbereich mit dem äußeren Ringbereich des Motorgehäuses 6 bzw. der Zweitisolation 28 verbindet, sind in den Figuren 8 und 9 deutlich erkennbar. Gut erkennbar ist auch, dass die Kontaktierfahnen 40 an der Rückseite des Stators 20 aus der Zweitisolation 28 in axialer Richtung vorragen, so dass sie im zusammengebauten Zustand der Pumpe in den Elektronikraum ragen.

Der Stator 20 weist ferner Fügeelemente 6b auf, die an der Rückseite des Stators 20 in axialer Richtung stiftartig vorragen. Die Fügeelemente 6b werden ebenfalls unmittelbar bei dem Umspritzen mit dem Kunststoff der Zweitisolation 28 aus dem Kunststoff der Zweitisolation 28 geformt. Sie dienen der Positionierung und Befestigung des Schichtaufbaus aus Stirnwand 30, Spaltfüller 32 und Platine 33 (Figur 1) relativ zum und am Stator 20.

An der Seite des Stators 20, an der das Anschlussgehäuse 7 geformt ist, führen elektrische Anschlusselemente 42 von der Rückseite des Stators 20 bzw. aus dem Elektronikraum der Pumpe nach außen in das Anschlussgehäuse 7. Von den Anschlusselementen 42 sind jeweils ein innerer Kontaktabschnitt 43 und ein äußerer Kontaktabschnitt 45 erkennbar. Die inneren Kontaktabschnitte 43 ragen von der Rückseite des Stators in axialer Richtung frei vor, so dass sie mit korrespondierenden elektrischen Anschlüssen der Platine 33 elektrisch konnektiert werden können. Die äußeren Kontaktabschnitte 45 ragen jeweils im Anschlussgehäuse 7 in axialer Richtung frei vor, so dass sie durch Herstellung einer entsprechenden Steckverbindung über korrespondierende Anschlüsse mit einer externen Energieversorgung und/oder Steuerung, beispielsweise der Motorsteuerung eines motorisch angetriebenen Fahrzeugs, wie insbesondere eines Kraftfahrzeugs, verbunden werden können.

In den Figuren 10 und 11 sind insbesondere die Anschlusselemente für den elektrischen Anschluss des Stators 20 an die externe Energieversorgung und Steuerung erkennbar. Dabei handelt es sich um die Kontaktierfahnen 40 und die Anschlusselemente 42 und 46. In Figur 10 sind der bewickelte Statorkern und die Zweitisolation 28, die zugleich auch das Motorgehäuse 6 bildet, voneinander losgelöst dargestellt. Dabei zeigt Figur 10 den bewickelten Statorkern nach Konnektierung der Kontaktierfahnen 40. In diesem Zustand wird der bewickelte Statorkern mit dem Kunststoff der Zweitisolation 28 umspritzt, wobei zugleich das Motorgehäuse 6 mit Anschlussgehäuse 7 und Drehlagerstruktur 8 geformt wird.

Die Anschlusselemente 42 und 46 werden vor dem Umspritzen mit dem Kunststoff der Zweitisolation 28 in die Spritzgießform relativ zum bewickelten Statorkern positioniert und ebenfalls mit dem Kunststoff der Zweitisolation 28 umspritzt, so dass sie nach dem Umspritzen im Kunststoff der Zweitisolation 28 eingebettet und in Position fixiert sind und lediglich noch mit jeweils ihrem inneren Kontaktabschnitt 43 und ihrem äußeren Kontaktabschnitt 45 aus der Kunststoffmasse frei vorragen. Die Anschlusselemente 42 und 46 sind in jeweils einer Seitenansicht U-förmig, mit zwei Seitenschenkeln, von denen der eine den inneren Kontaktabschnitt 43 und der andere den äußeren Kontaktabschnitt 45 bildet, und einem die beiden Seitenschenkel verbindenden mittleren Verbindungsabschnitt 44. Nach der Formung der Zweitisolation 28 und damit auch das Motorgehäuse 6 erstreckt sich der jeweilige Verbindungsschenkel 44 vom jeweiligen inneren Kontaktabschnitt 43 in radialer Richtung nach außen in das Anschlussgehäuse 7 und geht dort in den äußeren Kontaktabschnitt 45 über, der im Anschlussgehäuse 7 aus der Kunststoffmasse vorragt.

Die Anschlusselemente 42 und/oder 46 können im Bereich des jeweiligen Verbindungsabschnitts 44 eine rauere Oberfläche als in ihren Kontaktabschnitten 43 und 45 aufweisen. Die Oberfläche kann im jeweiligen Verbindungsabschnitt 44 beispielsweise geriffelt oder anders strukturiert sein, etwa durch Prägen oder Laserstrukturierung. Die größere Rauigkeit verbessert die Haftung zum Kunststoff, in dem der Verbindungsabschnitt 44 eingebettet ist, und verbessert die Abdichtung über die Länge der Einbettung.

In der Detaildarstellung der Figur 12 ist die Fügeverbindung erkennbar, mittels der die Stirnwand 30, der Spaltfüller 32 und die Platine 33 am Motorgehäuse 6 positioniert und befestigt sind. Im dargestellten, montieren Zustand ragen die Fügeelemente 6b durch den Schichtaufbau 30, 32, 33, der hierfür mit entsprechenden Durchgängen versehen ist. Die Fügeelemente 6b dienen der Herstellung einer nietartigen Fügeverbindung. Beim Zusammenbau werden die Stirnwand 30, der Spaltfüller 32 und die Platine 33 an der Rückseite des Stators 20 bzw. des Motorgehäuses 6 positioniert, so dass die Fügeelemente 6b durch die korrespondierenden Durchgänge des Schichtaufbaus 30, 32, 33 ragen und jeweils mit einem Kopfabschnitt über die Platine 33 hinaus vorragen. Anschließend werden die Kopfabschnitte an- oder aufgeschmolzen, so dass die Fügeelemente 6b die Platine 33 hintergreifen und dadurch am Motorgehäuse 6 fixieren.

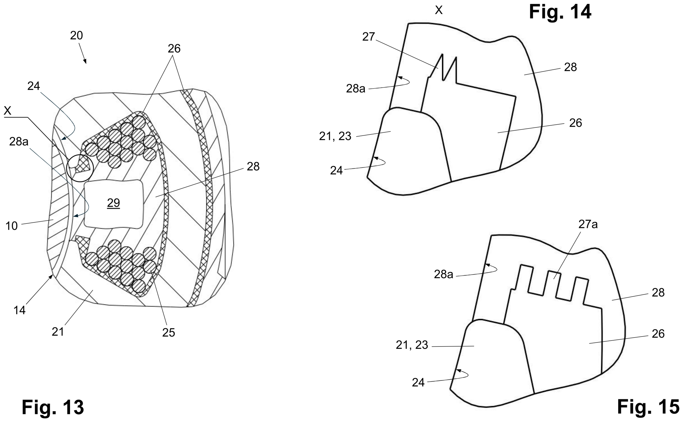

Figur 13 zeigt den Bereich einer Zahnlücke eines modifizierten Stators 20 in einem Querschnitt. Eine erste Modifikation besteht darin, dass die Statorzähne 21 und die Zweitisolation 28 gemeinsam eine in Umfangsrichtung um die Motorachse R zumindest im Wesentlichen überall glatte Lauffläche bilden, die sich aus den Laufflächen 24 der Statorzähne 21 und Laufflächen 28a der Zweitisolation 28, die in Umfangsrichtung alternierend aufeinander folgen, zusammensetzt. Durch die zumindest im Wesentlichen glatte, zusammengesetzte Lauffläche 24, 28a werden Verwirbelungen des Fluids im Laufspalt 14 reduziert oder gänzlich vermieden.

In Figur 14 sind ein Bereich an einem Zahnende 23 der Statorzähne 21 und ein Bereich der angrenzenden Zahnlücke vergrößert dargestellt. Dabei handelt es sich um das in Figur 13 eingetragene Detail X. In der Vergrößerung ist erkennbar, dass die von der Zweitisolation 28 gebildete Lauffläche 28a nicht exakt bündig und glatt an die Lauffläche 24 des Statorzahns 21 anschließt, sondern geringfügig hinter der Lauffläche 24 zurücksteht. Die zusammengesetzte Lauffläche 24, 28a weist somit im Bereich der Zahnlücken jeweils eine flache Vertiefung auf. In axialer Richtung, d. h. parallel zur Motorachse R, können diese Vertiefungen über die Länge der Zweitisolation 28 durchgehen oder an den beiden Stirnseiten des Statorkerns begrenzt sein, also Taschen bilden. Der radiale Versatz zwischen den Laufflächen 24 und 28a und die hierdurch entstehende Ungleichförmigkeit der zusammengesetzten Lauffläche 24, 28a sind jedoch deutlich geringer als bei der in den Figuren 4 und 5 dargestellten Ausführung der beiden Isolationen 26 und 28.

Eine zweite Modifikation besteht darin, dass sich die Zweitisolation 28 nach radial innen, d h. in Richtung auf die Motorachse R, über die Erstisolation 26 hinaus erstreckt und diese umgreift, d.h. vom Zahnlückengrund aus gesehen hintergreift, und sich im Bereich der Zahnenden 23 bis zu den Flanken der Statorzähne 21 erstreckt. Durch diese geometrische Modifikation kann die Abdichtung zum Laufspalt 14 verbessert werden. Grundsätzlich kann die Erstisolation 26 bis zur Lauffläche 28a nach radial innen verlängert werden, um die Lauffläche 28a mit der Zweitisolation 28 gemeinsam zu bilden. Die Bildung der Lauffläche 28a nur durch die Zweitisolation 28 ist jedoch nicht nur wegen des Umgreifens hinsichtlich der zum Laufspalt 14 erhaltenen Abdichtung, sondern auch für den Erhalt einer glatten Lauffläche 28a vorteilhaft.

Im Ausführungsbeispiel der Figur 15 ist die Fügegeometrie gegenüber der Fügegeometrie 27 modifiziert und deshalb als Fügegeometrie 27a bezeichnet. Die Modifikation besteht darin, dass die Abragungen, mit denen die Erstisolation 26 in die Zweitisolation 28 ragt bzw. eingreift, an ihren äußeren Enden einen flachen äußeren Umfangsrand aufweisen. Während die Abragungen der Fügegeometrie 27 an ihrem äußeren Umfangsrand jeweils spitz auslaufen, dort also im dargestellten Schnitt jeweils eine einzige Spitze bilden, bilden die Abragungen der modifizierten Fügegeometrie 27a an ihrem äußeren Umfangsrand jeweils zwei Kanten. Im Ausführungsbeispiel sind sie im dargestellten Schnitt rechteckförmig. Im Ergebnis wird eine Abdichtung vergleichbar einer Labyrinthdichtung erhalten, nur mit dem Unterschied, dass die Isolationen 26 und 28 relativ zueinander keine Drehbewegung ausführen. Die Abragungen der Fügegeometrie können auch anders geformt sein, vorteilhaft ist jedoch die Formung mit einer oder mehreren Kanten, wie etwa einer einzigen Spitze oder zwei Kanten jeweils am äußeren Umfangsrand. Die Ausbildung der Fügegeometrie, beispielhaft der Fügegeometrien 27 und 27a, mit mehreren Abragungen und der dadurch erhaltene kammartige Eingriff sorgt bereits für einen vorteilhaft langen Dichtspalt zwischen den beiden Isolationen 26 und 28. Die Bildung einer Spitze oder mehrerer Kanten, die ihrerseits jeweils eine Spitze bilden, ist für die Abdichtung zusätzlich vorteilhaft, weil der Kunststoff der Erstisolation 26 bei einem Umspritzen mit dem Kunststoff der Zweitisolation 28 im Bereich der jeweiligen Spitze bzw. Kante angeschmolzen wird, so dass zumindest lokal, an der jeweiligen Spitze bzw. Kante, eine stoffschlüssige Verbindung in Form einer Schmelzzone und somit eine hinsichtlich der Dichtwirkung verbesserte Fügezone erhalten wird. Der Vollständigkeit halber sei erwähnt, dass die Schmelzzone an der Spitze bzw. an den Kanten der jeweiligen Abragung um den jeweiligen Statorzahn 21 vorteilhafterweise endlos umläuft.

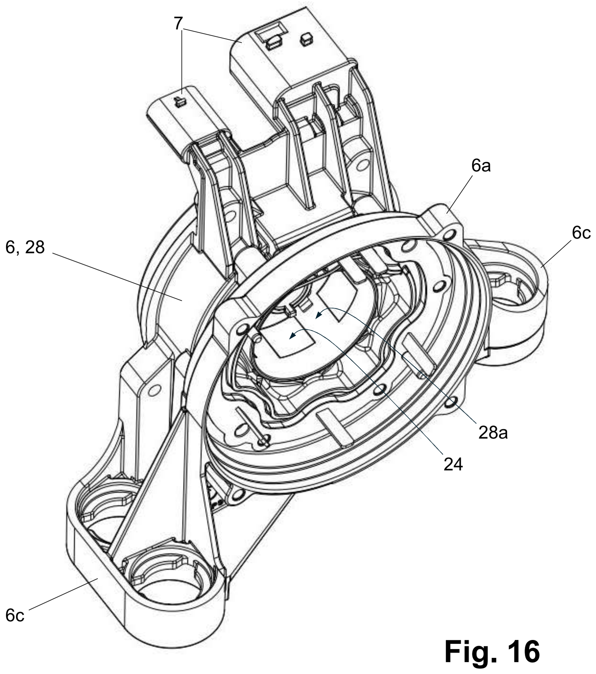

Figur 16 zeigt ein modifiziertes Motorgehäuse 6 in einer Isometrie auf die der Förderkammer abgewandte Rückseite. Das Motorgehäuse 6 wird, wie bereits beschrieben, unmittelbar bei der Formung der Zweitisolation 28 geformt und kann insbesondere aus dem gleichen Kunststoff wie die Zweitisolation 26 bestehen. Im Unterschied zu dem anhand der Figuren 1 bis 12 beschriebenen Ausführungsbeispiel ist das Motorgehäuse 6 um eine weitere Zusatzfunktionalität ergänzt. Die Ergänzung besteht darin, dass am Motorgehäuse 6 zusätzlich auch eine Montagegeometrie 6c geformt ist. Die Montagegeometrie 6c ist für eine Montage der Pumpe mittels Schraubbefestigung eingerichtet. Die Montagegeometrie 6c umfasst mehrere Montageflansche, die vom Hauptkörper des Motorgehäuses 6 vorragen und sozusagen freigestellte Befestigungs- bzw. Montageflansche bilden. Die Montageflansche weisen jeweils einen Durchgang für ein Befestigungsmittel, wie etwa eine Befestigungsschraube, auf. Die Montagegeometrie 6c ist Bestandteil der Zweitumspritzung bzw. der Zweitisolation 28. Sie wird unmittelbar bei Formung der Zweitisolation 28 mitgeformt.

Die Montagegeometrie 6c umfasst mehrere Durchgänge jeweils für ein Befestigungsmittel, wie etwa eine Befestigungsschraube. Um einen Dämpfungseffekt zu erzielen, kann die Montagegeometrie 6c elastische Fügeelemente umfassen, die im Bereich der Durchgänge angeordnet sind, beispielsweise form- und/oder reibschlüssig mit den Montageflanschen gefügt sind.

### Bezugszeichen:

- 1: Fördergehäuseteil
- 1a: Fügeelement, Durchgang
- 2: Einlass
- 3: Auslass
- 4: Rückwand
- 4a: Kühlpfadeinlass
- 4b: Kühlpfadeinlass
- 5: Dichtung
- 6: Motorgehäuse
- 6a: Fügeelement, Durchgang
- 6b: Fügeelement
- 6c: Montagegeometrie
- 7: Anschlussgehäuse
- 8: Drehlagerstruktur
- 8a: Durchgang
- 9: Befestigungselement

- 10: Rotor
- 11: Rotorträger
- 12: Magnetehalter
- 13: Permanentmagnet
- 14: Laufspalt
- 15: Förderrad
- 16: Antriebswelle
- 16a: Kühlpfadauslass
- 17: Lagerbuchse
- 18: Lagerscheibe
- 19: Dichtung

- 20: Stator
- 21: Statorzahn
- 22: Joch
- 23: Zahnende
- 24: Innenumfang, Lauffläche
- 25: Spule
- 25a: Anschlussleitung
- 26: Erstisolation
- 26a: Haltegeometrie
- 26b: Haltegeometrie
- 27: Fügegeometrie
- 27a: Fügegeometrie
- 28: Zweitisolation
- 28a: Innenumfang, Lauffläche
- 29: Kühlkanal

- 30: Stirnwand
- 31: Dichtung
- 32: Spaltfüller
- 33: Platine
- 34: Motorelektronik
- 35: Deckel
- 36: Dämpfer, Elastomerring
- 37: Montagestruktur
- 38: Montageflansch

- 40: Kontaktierfahne
- 41: Verbindungsleitung
- 42: elektrisches Anschlusselement
- 43: innerer Kontaktabschnitt
- 44: Verbindungsabschnitt
- 45: äußerer Kontaktabschnitt
- 46: elektrisches Anschlusselement

- d: Höhe der Fügegeometrie
- D: Dicke der Erstisolation
- R: Drehachse
- w: Laufspaltweite

## Patentansprüche

1. Pumpe zur Förderung eines Fluids, beispielsweise eines Kühlfluids und/oder eines Schmierfluids, die Pumpe umfassend:
1.1 ein Fördergehäuse (1, 4) mit einem Einlass (2) und einem Auslass (3) für das Fluid,
1.2 ein im Fördergehäuse (1, 4) drehbares Förderrad (15) zur Förderung des Fluids vom Einlass (2) zum Auslass (3), und
1.3 einen elektrischen Antriebsmotor mit einem um eine Motorachse (R) drehbaren Rotor (10), der mit dem Förderrad (15) für dessen Antrieb gekoppelt ist, und einem Stator (20), der mit dem Rotor (10) einen Laufspalt (14) um die Motorachse (R) bildet, der Stator (20) umfassend:
1.4 einen Statorkern (21, 22, 23) mit zumindest im Wesentlichen radial zur Motorachse (R) weisenden Statorzähnen (21) und zwischen den Statorzähnen (21) verbleibenden Zahnlücken,
1.5 elektrische Leitungen, die zur Bildung elektrischer Spulen (25) um die Statorzähne (21) gewickelt sind,
1.6 eine Erstisolation (26), die zur elektrischen Isolierung zwischen dem jeweiligen Statorzahn (21) und der Spule (25), die den jeweiligen Statorzahn (21) umgibt, gebildet ist,
1.7 und eine Zweitisolation (28), die zur elektrischen Isolierung benachbarter Spulen (25) in den Zahnlücken gebildet ist,
1.8 wobei die Statorzähne (21) an Zahnenden (23) jeweils eine Lauffläche (24) aufweisen, die dem Rotor (10) über den Laufspalt (14) radial zugewandt gegenüberliegt und von der Erstisolation (26) und der Zweitisolation (28) frei ist,
1.9 und sich in einer oder mehreren der Zahnlücken jeweils ein von Kühlmittel durchströmbarer Kühlkanal (29) in axialer Richtung durch die Zweitisolation (28) erstreckt, wobei der jeweilige Kühlkanal (29) vorzugsweise ein gerader, axialer Durchgang durch die Zweitisolation (28) ist.

2. Pumpe nach dem vorhergehenden Anspruch, wobei die Erstisolation (26) und die Zweitisolation (28) zumindest im Bereich der Zahnenden (23) um den jeweiligen Statorzahn (21) umlaufend undurchlässig für das Fluid verbunden sind, vorzugsweise stoffschlüssig, so dass die Spulen (25) vom Laufspalt getrennt sind.

3. Pumpe nach einem der vorhergehenden Ansprüche, wobei die Erstisolation (26) und die Zweitisolation (28) im Bereich des Zahnendes (23) des jeweiligen Statorzahns (21) eine oder mehrere um den jeweiligen Statorzahn (21) umlaufende Fügegeometrien (27; 27a) aufweisen, die ineinandergreifen, um im Eingriff eine für das Fluid undurchlässige ringförmige Fügezone zu bilden.

4. Pumpe nach einem der vorhergehenden Ansprüche, wobei die Erstisolation (26) und die Zweitisolation (28) im Bereich der Zahnenden (23) eine um den jeweiligen Statorzahn (21) ringförmig erstreckte Fügezone bilden, in der ein Mikrogefüge der Erstisolation (26) und ein Mikrogefüge der Zweitisolation (28) tiefer als am Grund der Zahnlücken ineinandergreifen.

5. Pumpe nach einem der vorhergehenden Ansprüche, wobei
- die Erstisolation (26) aus einem ersten Kunststoff und die Zweitisolation (28) aus einem zweiten Kunststoff bestehen,
- die Erstisolation (26) und die Zweitisolation (28) im Bereich der Zahnenden (23) in einer um den jeweiligen Statorzahn (21) ringförmig erstreckten Fügezone verschmolzen sind und
- ein von dem ersten Kunststoff und dem zweiten Kunststoff gebildetes Mischgefüge in der ringförmigen Fügezone eine größere Tiefe (d) als am Grund der Zahnlücken aufweist.

6. Pumpe nach einem der vorhergehenden Ansprüche, wobei die Erstisolation (26) den Statorkern (21, 22, 23) bis zu den Zahnenden (23) überall einhüllt, so dass nur die Zahnenden (23) jeweils zumindest an ihrer den Laufspalt (14) begrenzenden Lauffläche (24) von der Erstisolation (26) frei sind.

7. Pumpe nach einem der vorhergehenden Ansprüche, wobei sich ein Kühlpfad für das Fluid von einem Kühlpfadeinlass (4a, 4b), der im Fördergehäuse (1, 4) in einem Bereich höheren Drucks mündet, durch den Laufspalt (14) und/oder den jeweiligen Kühlkanal (29) bis zu einem Kühlpfadauslass (16a), der im Fördergehäuse (1, 4) in einem Bereich niederen Drucks mündet, erstreckt.

8. Pumpe nach einem der vorhergehenden Ansprüche, wobei der Rotor (10) des Antriebsmotors und das Förderrad (15) koaxial längs einer um die Drehachse (R) drehbaren Antriebswelle (16), die vorzugsweise als Hohlwelle gebildet ist, angeordnet sind.

9. Pumpe nach einem der vorhergehenden Ansprüche, wobei die Zweitisolation (28) den Statorkern (21, 22, 23) und die Spulen (25) bis zu den Zahnenden (23) überall einhüllt, so dass vom Statorkern (21, 22, 23) nur die Zahnenden (23) jeweils zumindest an ihrer den Laufspalt (14) begrenzenden Lauffläche (24) von der Zweitisolation (28) frei sind.

10. Pumpe nach einem der vorhergehenden Ansprüche, wobei die Zweitisolation (28) gemeinsam mit einem den Statorkern (21, 22, 23) umgebenden Motorgehäuse (6) und/oder gemeinsam mit einer Montagegeometrie (6c) zur Montage der Pumpe und/oder gemeinsam mit einem Anschlussgehäuse (7) für den elektrischen Anschluss an ein externes System zur Energieversorgung und/oder Steuerung des Antriebsmotors (10, 20) und/oder gemeinsam mit einer Drehlagerstruktur (8) zur Radiallagerung einer mit dem Rotor (10) und/oder dem Förderrad (15) drehunbeweglich verbundenen Antriebswelle (16) in einem Verfahren der Urformung in einem Stück, beispielsweise als Gussteil aus Kunststoff, geformt ist.

11. Pumpe nach einem der vorhergehenden Ansprüche, wobei die Zweitisolation (28) ein Anschlussgehäuse (7) für ein oder mehrere elektrische Anschlusselemente (42, 46) bildet und der Stator (20) über das Anschlussgehäuse (7) und das jeweilige Anschlusselement (42, 46) an ein externes System zur Energieversorgung und/oder eine Steuerung anschließbar ist, beispielsweise mittels Steckkontaktverbindung, wobei das jeweilige elektrische Anschlusselement (42, 46) vorzugsweise in der Zweitisolation (28) eingebettet und dadurch relativ zum Anschlussgehäuse (7) und/oder relativ zum Motorgehäuse (6) positioniert und fixiert ist.

12. Pumpe nach einem der vorhergehenden Ansprüche, wobei der Laufspalt (14) eine radiale Laufspaltweite w, die radial zur Drehachse (R) zwischen der Lauffläche (24) eines der Statorzähne (23) und einem über den Laufspalt (14) gegenüberliegenden Umfang des Rotors (10) gemessen wird, und die Erstisolation (26) im Bereich der Zahnenden (23) eine Dicke D aufweist, wobei w < D oder w < 0.5•D.

13. Pumpe nach einem der vorhergehenden Ansprüche, wobei
- die Erstisolation (26) und die Zweitisolation (28) im Bereich der Zahnlücken radial hinter den Laufflächen (24) der Statorzähne (23) zurückstehen
oder stattdessen
- die Erstisolation (26) und die Zweitisolation (28) im Bereich der Zahnlücken bündig mit den Laufflächen (24) der Statorzähne (23) abschließen.

14. Pumpe nach einem der vorhergehenden Ansprüche, die als Kühlmedienpumpe zur Förderung eines Wasser-/Glykol-Gemisches und/oder eines dielektrischen Wärmeträgeröls zur Kühlung oder zur Temperierung (Kühlung und/oder Erwärmung)
- eines Verbrennungsmotors und/oder
- von Antriebsstrangkomponenten eines verbrennungsmotorischen Fahrzeug-Antriebsstrangs und/oder
- von Komponenten des Antriebsstrangs eines batterieelektrischen Fahrzeugs und/oder
- der Batteriezellen einer Traktionsbatterie eines Kraftfahrzeugs ausgeführt ist.

15. Verfahren zur Herstellung eines Stators für einen elektrischen Antriebsmotor, vorzugsweise des Stators (20) für den Antriebsmotor der Pumpe nach einem der vorhergehenden Ansprüche, mit folgenden Schritten:
a. ein Statorkern (21, 22, 23), der zumindest im Wesentlichen radial zu einer Motorachse (R) weisende Statorzähne (21) mit freien Zahnenden (23) und zwischen den Statorzähnen (21) verbleibende Zahnlücken aufweist, wird mit einem elektrisch isolierenden ersten Kunststoff umspritzt, um eine Erstisolation (26) zu bilden, welche die Statorzähne (21) umgibt und die Zahnlücken vorzugsweise auskleidet,
b. elektrische Leitungen werden um die mit der Erstisolation (26) versehenen Statorzähne (21) gewickelt, um elektrische Spulen (25) zu bilden,
c. der Statorkern (21, 22, 23) und die Spulen (25) werden mit einem elektrisch isolierenden zweiten Kunststoff umspritzt, um eine Zweitisolation (28) zu bilden, welche die Spulen (25) und den Statorkern (21, 22, 23) über die Spulen (25) hinaus bis zu den Zahnenden (23) einhüllt, und
d. bei dem Spritzen der Zweitisolation (28) werden im Bereich der Zahnlücken in axialer Richtung durch die Zweitisolation (28) erstreckte Kühlkanäle (29) zur Durchleitung eines der Kühlung des Stators dienenden Fluids geformt,
e. wobei an den Zahnenden (23) eine Lauffläche (24) zur Bildung eines Laufspalts (14) mit einem Rotor (10) des Antriebsmotors von der Erstisolation (26) und der Zweitisolation (28) frei ist.

16. Verfahren nach dem vorhergehenden Anspruch, wobei die Erstisolation (26) und die Zweitisolation (28) so gespritzt werden, dass die Lauffläche (24) bei dem Spritzen frei vom ersten Kunststoff und frei vom zweiten Kunststoff bleibt, oder wobei an der Lauffläche (24) haftender Kunststoff nach dem Spritzen abgetragen wird, vorzugsweise spanend.

17. Verfahren nach einem der zwei unmittelbar vorhergehenden Ansprüche, wobei die Erstisolation (26) im Bereich der Zahnenden (23) mit einer oder mehreren um den jeweiligen Statorzahn (21) umlaufenden Fügegeometrien (27; 27a) in Form von einer oder mehreren Abragungen und/oder Vertiefungen gespritzt wird und die jeweilige Fügegeometrie (27; 27a) beim Spritzen der Zweitisolation (28) im Kontakt mit dem zweiten Kunststoff an- oder aufgeschmolzen wird, so dass die jeweilige Fügegeometrie (27; 27a) im Falle des Anschmelzens in die Zweitisolation (28) eingreift oder im Falle des Aufschmelzens mit dem ersten Kunststoff mikroskopisch ein Mischgefüge bildet.
